# EUROPEAN PATENT SPECIFICATION

(11) **EP 0 805 715 B1**
(45) Date of publication and mention of the grant of the patent: **12.12.2001**
(21) Application number: 96905243.0
(22) Date of filing: 22.01.1996
(51) Int. Cl.: B01J 19/08, B01J 19/12, C02F 1/48

(54) **METHOD AND APPARATUS FOR DELIVERING ELECTROMAGNETIC ENERGY INTO A SOLUTION**
METHODE UND VORRICHTUNG ZUR ZUFÜHRUNG VON ELEKTROMAGNETISCHER ENERGIE IN EINER LÖSUNG
PROCEDE ET APPAREIL POUR INTRODUIRE UNE ENERGIE ELECTROMAGNETIQUE DANS UNE SOLUTION

(30) Priority: 25.01.1995 US 378462; 07.11.1995 US 554458
(43) Date of publication of application: 12.11.1997
(73) Proprietor: Z.P.M., Inc., Goleta, CA 93117 (US)
(72) Inventor: MORSE, Dwain, E., Santa Barbara, CA 93103 (US); COOK, James, H., Santa Barbara, CA 93105 (US); MATHERLY, Thomas, G., Lompoc, CA 93436 (US); HAM, Howard, M., Jr., Santa Ynes, CA 94460 (US)
(74) Representative: McCarthy, Denis Alexis
(86) International application number: US9601122
(87) International publication number: WO9622831

(56) References cited:
- WO-A-88/05763
- PATENT ABSTRACTS OF JAPAN vol. 17, no. 606 (C-1128), 8 November 1993 -& JP 05 184916 A (GOYO GIKEN KOGYO K.K.), 27 July 1993, -& DATABASE WPI Section Ch, Week 9334 Derwent Publications Ltd., London, GB; Class H06, AN 93-269180 XP002061859 & JP 05 184 916 (GOTO GIKEN KOGYO K.K.) , 27 July 1993

## Description

### BACKGROUND OF THE INVENTION

The present invention relates to a method and apparatus for delivering electromagnetic energy into a colloidal suspension, i.e., a solution, for the purpose of modifying its characteristics.

Various systems are known for treating water or other solutions by introducing electric or magnetic energy. For example only, see U.S. Patents 4,865,747; 4,865,748; 4,963,268; 5,036,170; 5,074,998; 5,113,751; 5,13§,675; 5,171,431; 5,173,169; 5,183,512; 5,183,565; 5,217,607; 5,230,807; 5,236,670; 5,304,289; 5,306,887; 5,320,726; and 5,326,446.

Further, it has been reported in a paper by Zeta-Meter, Inc., a manufacturer of equipment for monitoring zeta potential, that "Zeta potential can help you understand and control colloidal suspensions. Examples include complex biological systems such as blood and functional ones like paint. Colloidal suspensions can be as thick as paste (like cement) or as dilute as the turbidity particles in a lake. Water, milk, wine, clay, dyes, inks, paper and pharmaceuticals are good examples of useful colloidal systems. Water is a common suspending liquid, although non-aqueous liquids are used as well. In many cases, the performance of a suspension can be improved by understanding the effect of colloidal behavior on such properties as viscosity, settling and effective particle size." See: "Zeta Potential: A Complete Course in 5 Minutes" which is incorporated herein by reference.

### SUMMARY OF THE INVENTION

The present invention is directed to an apparatus for the delivery of RF-modulated electromagnetic energy, i.e., magnetic and electric fields, into a solution for modifying the characteristics of the solution. Furthermore, the present invention is directed to a method and apparatus for modifying the characteristics of a second solution by delivering RF-modulated electromagnetic energy, i.e., magnetic and electric fields, into a first solution and then causing the first solution to be proximate to said second solution.

Preferred embodiments of delivery apparatus in accordance with the invention are comprised of 1) a tubular housing having closed ends and forming a water-tight chamber, 2) a coil contained within the chamber delivering a magnetic field into a solution, 3) at least one electric field probe coupled to the coil for delivering an electric field into the solution, and 4) coupling means for coupling an electromagnetic signal to the coil.

In a preferred embodiment, the electric field probe (hereinafter, the "voltage" probe) is contained within a chamber containing a first solution electrically isolated from a second solution which one desires to treat. A signal generator coupled to the coil is used to energize the delivery apparatus for producing the magnetic and electric fields. The signal generator is preferably configured to adjust the amplitude and duty cycle of the energizing signal.

A delivery apparatus in accordance with the invention, is typically used in proximity to a solution whose characteristics, as indicated by its zeta potential or any other appropriate measure of the modified characteristics of the solution, can be modified by applied RF-modulated energy. In accordance with one aspect of the invention, the applied RF energy is controlled, i.e., power level, duration and duty cycle to optimize solution treatment. Moreover, the distribution of delivery apparatus units within the solution is also selected to optimize solution treatment.

A preferred method for treating a second solution, comprises the steps of: 1) applying RF-modulated energy to a first solution, and 2) causing said first solution to be proximate to a second solution to treat said second solution.

In a further aspect of a preferred method, the first solution is transported between a treatment station, where the RF-modulated energy is applied to the first solution, to a process station which contains the second solution. At the process station, the first solution is then passed proximate to the second solution to treat the second solution.

A delivery apparatus in accordance with the invention, preferably practices the preferred method by recirculating the first solution within a closed pipe isolated from the second solution.

In an alternative preferred method for treating a solution, the second solution is transported from a process station to a treatment station which contains the first solution which has been treated with the RF-modulated energy. After passing the second solution proximate to the first solution, the second solution is returned to the process station.

The novel features of the invention are set forth with particularity in the appended claims. The invention will be best understood from the following description when read in conjunction with the accompanying drawings.

### BRIEF DESCRIPTION OF THE DRAWINGS

Figure 1 comprises a block diagram of a preferred embodiment of a delivery system for delivering RF-modulated electromagnetic energy to a solution;
Figure 2 is a graphical representation of how the zeta potential of a solution is modified as a function of the amplitude and duration of treatment with RF energy;
Figure 3 is a block diagram of a test bed for determining treatment parameter settings;
Figure 4 comprises a top level view of a tank showing a distribution of delivery apparatus and associated RF energy distribution;
Figure 5 comprises a side elevation view of the tank of Figure 4 along the plane 5 - 5;
Figure 6 is a block diagram of the signal generator of the preferred embodiment of Figure 1;
Figure 7 is a side elevation view of a preferred distribution of distribution apparatus in a tank along with sensors for monitoring the effectiveness of the treatment parameters;
Figure 8A is a transparent view of a first preferred embodiment of a delivery apparatus;
Figure 8B is a schematic cross section of the embodiment of Figure 8A;
Figure 9A is a transparent view of a second preferred embodiment of a delivery apparatus;
Figure 9B is a schematic cross section of the embodiment of Figure 9A;
Figure 10 is a transparent view of a third preferred embodiment of a delivery apparatus;
Figure 11 is a cross sectional view of the embodiment of Figure 10 along the plane 11 - 11;
Figure 12 is a partial cross sectional view of a fourth preferred embodiment of a delivery apparatus;
Figure 13 is a partial cross sectional view of a fifth preferred embodiment of a delivery apparatus;
Figure 14 comprises a block diagram of a preferred embodiment of a remote delivery system for delivering RF-modulated energy to a secondary solution by recirculating a treated primary solution between the delivery apparatus and a process station containing the secondary solution;
Figures 15A-15C are block diagrams of alternative radiators for treating the secondary solution with radiation from the primary solution;
Figure 16 is a block diagram of the delivery system of Figure 14 showing feedback control of the delivery apparatus;
Figure 17 is a block diagram of a second preferred embodiment of a remote delivery system where the treatment station contains a tank of primary solution that is recirculated between the process station and the treatment station;
Figure 18 is a block diagram of a third preferred embodiment of a remote delivery system where the secondary solution is recirculated from the process station to the treatment station where it is passed proximate to a primary solution contained within the delivery apparatus;
Figure 19 is a block diagram of a fourth preferred embodiment of a remote delivery system where the secondary solution is recirculated from the process station to a tank in the treatment station having a delivery apparatus and a treated primary solution located within;
Figure 20 is a block diagram of a fifth preferred embodiment of a remote delivery system where the primary solution passes unidirectionally past a delivery apparatus in the treatment station to a process station containing a secondary solution;
Figure 21 is an exemplary system for practicing the described method of treating a secondary solution by recirculating a treated primary solution proximate to the secondary solution;
Figure 22 is a cross sectional end view of the delivery apparatus of Figure 21 along the plane 22 - 22; and
Figures 23A-23F are schematic diagrams demonstrating additional design criteria that can be used in constructing delivery apparatus for treating a primary solution that is then used to treat a secondary solution.

### DESCRIPTION OF THE PREFERRED EMBODIMENTS

The present invention relates to an apparatus for delivering electromagnetic energy in the form of magnetic and electric fields into a colloidal suspension, i.e., a solution, for modifying its characteristics. As described in the aforementioned paper by Zeta Meter, Inc., the characteristics of a solution can be desirably altered when its zeta potential is modified. It is believed that the ability to modify a solution's characteristics, e.g., its zeta potential or any other appropriate measure, is improved when it is subjected to an RF-modulated magnetic field and an RF-modulated electric field. Thus, it is an object of the present invention to provide an improved system for delivering RF-modulated electromagnetic energy into a solution.

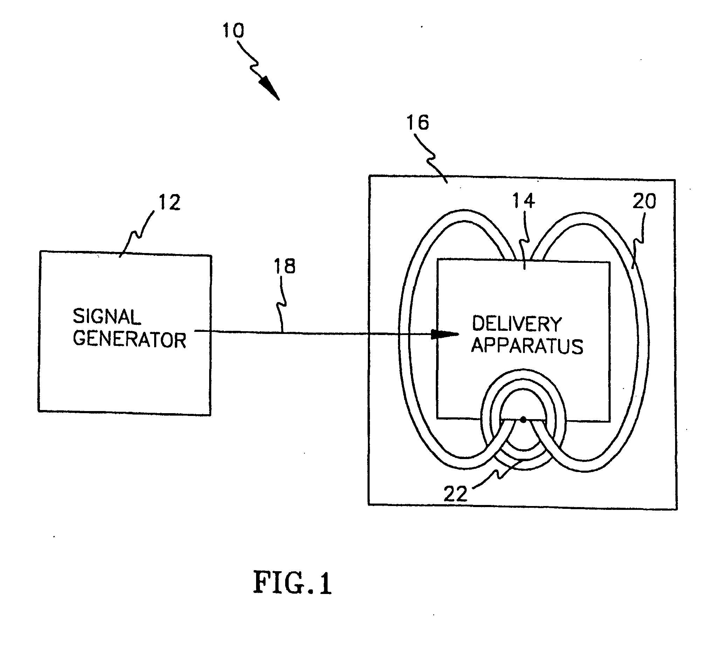

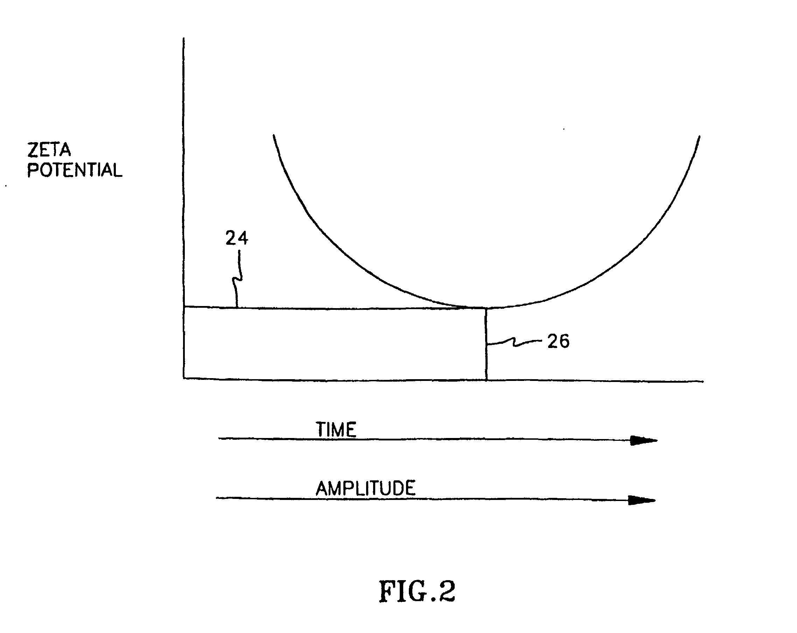

Figure 1 shows a block diagram of a delivery system 10, primarily comprised of a signal generator 12 and a delivery apparatus 14 contained within a solution 16, e.g., a fluid or gas. The signal generator 12 generates an RF-modulated signal 18 that drives the delivery apparatus 14. The delivery apparatus 14, when stimulated by the RF-modulated signal 18, generates a magnetic field 20 and an electric field 22. As shown in Figure 2, some solution's characteristics, e.g., its zeta potential, alter as a function of the time duration and/or amplitude of the RF-modulated energy delivered into the solution. However, modification of the zeta potential of the solution in response to RF-modulated energy reaches a valley 24 and reverses when an energy level increases beyond an optimal treatment point 26, as a function of the time duration and/or amplitude of the RF-modulated energy delivered. The modification to the solution is believed to be time limited and thus decreases over time. Thus, preferred embodiments of the present invention apply RF-modulated energy for a first time period, remove the RF-modulated energy for a second time period and then repeat this application and removal pattern, defining a duty cycle. The duty cycle and the amplitude cooperatively determine the rate that power is delivered into the solution.

As with most electromagnetic energy, the intensity of energy measured from the delivery apparatus 14 varies with distance. Thus, to uniformly treat the solution 16, the distance from the delivery apparatus 14 and attributes of the RF-modulated signal 18 must be used in conjunction to select treatment parameters, e.g., time duration, duty cycle, amplitude, and distance, which determine a rate that power is applied to the majority of the solution and thus achieve the desired modification.

**TABLE I**

| Delivery Apparatus | D = 0 V (estimated) Atmosphere | D = 6 in. V Water | D = 1 Ft. V Water | D = 4 Ft. V Water | D = 6 Ft. V Water |
|---|---|---|---|---|---|
| DA I | 5000 | 12.0 | 6.0 | 2.0 | 1.0 |
| DA II | 10,000 | 25.0 | 18.0 | 12.0 | 8.0 |

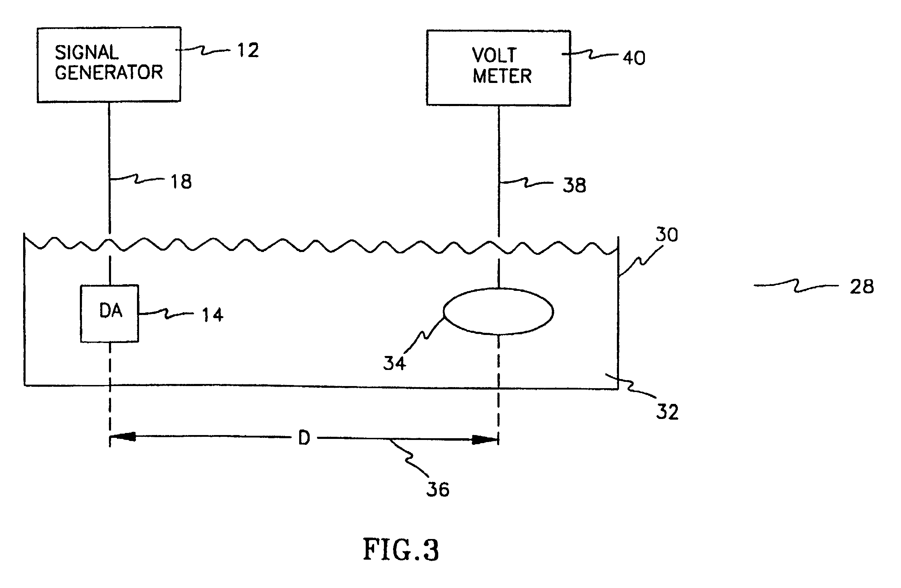

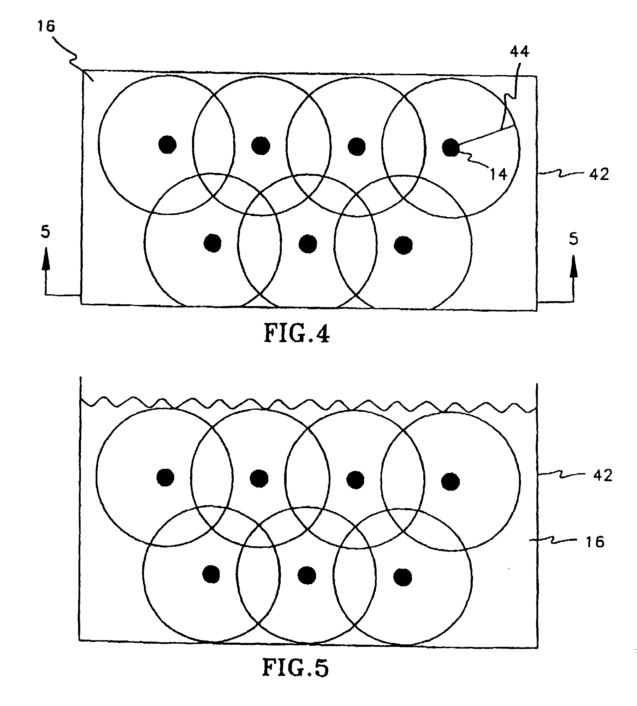

Figure 3 shows a test bed 28 for determining the treatment parameters. The test bed 28 is comprised of a tank 30 that is filled with a test fluid 32 corresponding to the solution 16 that is to be treated. The delivery apparatus 14 is submerged within the fluid 32 and is driven by the signal generator 12 via the RF-modulated signal 18. A sensor 34, primarily comprised of a coil, is submerged within the fluid 32 a distance 36 away from the delivery apparatus 14. The sensor 34 is coupled via signal path 38 to a voltmeter 40 to measure the magnitude of RF energy coupled from the delivery apparatus 14 to the sensor 34 through the fluid 32. Voltages measured by the voltmeter 40 are believed to correspond to modifications of the fluid 32, e.g., its zeta potential. Using the test bed 28, measurements are taken to determine test data as listed above in Table I corresponding to various preferred embodiments of the delivery apparatus 14 (discussed further below). Accordingly, as shown in Figures 4 and 5, a plurality of delivery apparatus 14 are distributed in an actual treatment system tank 42 within a three dimensional matrix. By distributing the delivery apparatus 14 accordingly, radial arcs of treatment distance 44 containing a desired permissible range of RF energy can be positioned to encompass the majority of the solution 16 to be treated. Once the desired treatment distance 44 is chosen, the remaining treatment parameters, the time duration and amplitude of the RF-modulated signal 18, are interactively chosen according to the test data to achieve the desired modification to the solution.

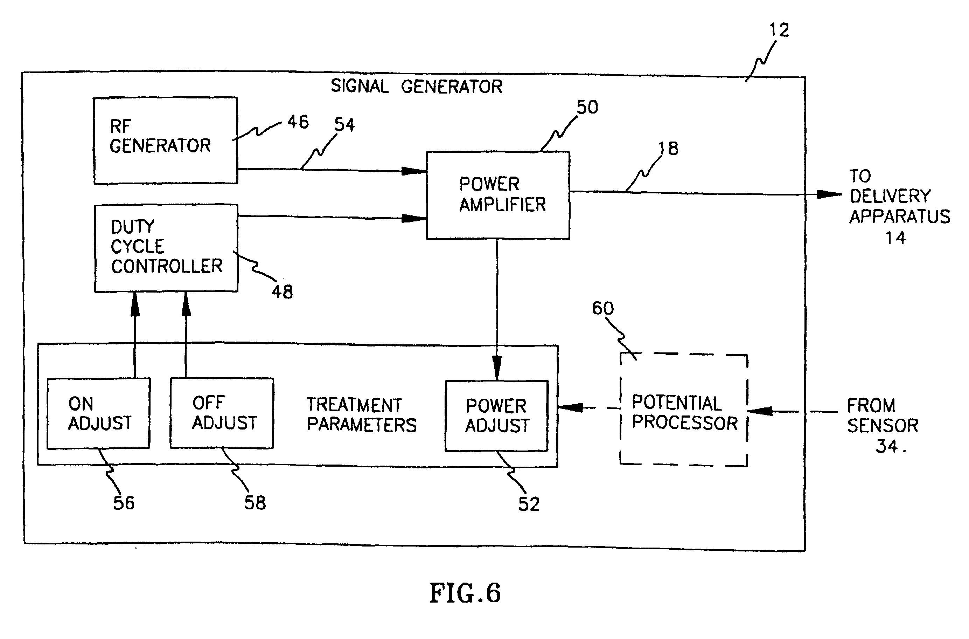

Figure 6 shows a block diagram of an exemplary signal generator 12, primarily comprised of an RF generator 46 which generates a fixed RF frequency, e.g., 27.225 MHz, a duty cycle controller 48 and a power amplifier 50. The power amplifier 50, under control of a power/amplitude adjustment 52, operates on an RF signal 54 input from the RF generator 46 and outputs a fixed amplitude signal to the delivery apparatus 14 via the RF-modulated signal 18 according to the selected treatment parameters. The duty cycle controller 48 controls the power amplifier 50 by modulating its output on and off. The duty cycle controller 50 is set according to an on adjustment 56 and an off adjustment 58 to generate the duty cycle according to the selected treatment parameters. The on and off adjustments 56, 58 are preferably adjustable in increments, e.g., one minute, up to a duration of sixty minutes. Thus, a typical setting of ten minutes on and sixty minutes off can be accommodated. While Figure 6 shows an exemplary signal generator 12, any other implementation that provides an RF-modulated signal to a delivery apparatus is considered to be within the scope of a signal generator for the present invention.

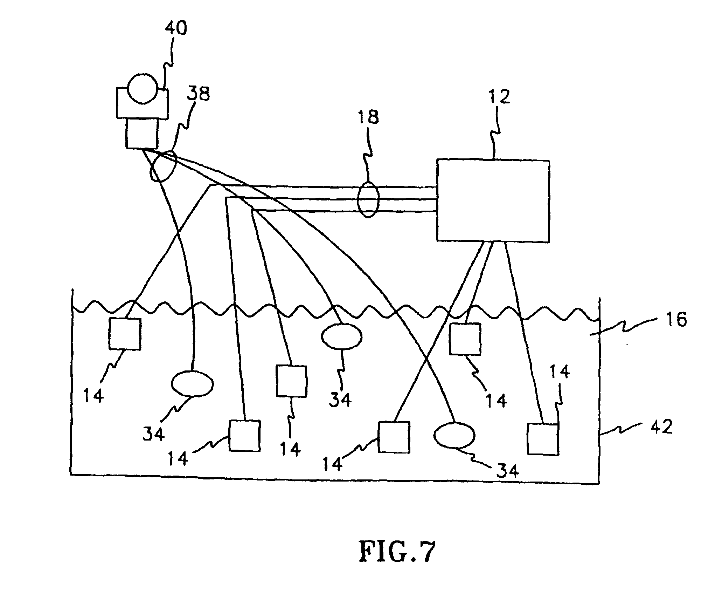

In a preferred embodiment, as shown in Figure 7, a plurality of sensors 34 are present permitting confirmation of the efficacy of the settings of the treatment parameters in its actual environment. However, it is recognized, that sensors 34 only read voltages that are indicative of the effectiveness of the delivery system 10 which operates in an open loop manner. Thus, in an alternative embodiment, the sensors 34 are replaced by sensors that directly determine the modification to the solution, e.g., its zeta potential value. In this alternative embodiment, a potential processor 60 (see Figure 6) reads the achieved modification to the solution, e.g., its zeta potential, and accordingly modifies the duty cycle controller 48 and the power amplifier 50 by interactively determining preferred settings for the on adjustment 56, the off adjustment 58 and the power amplitude adjustment 52. Thus, closed loop control is achieved in this alternative embodiment.

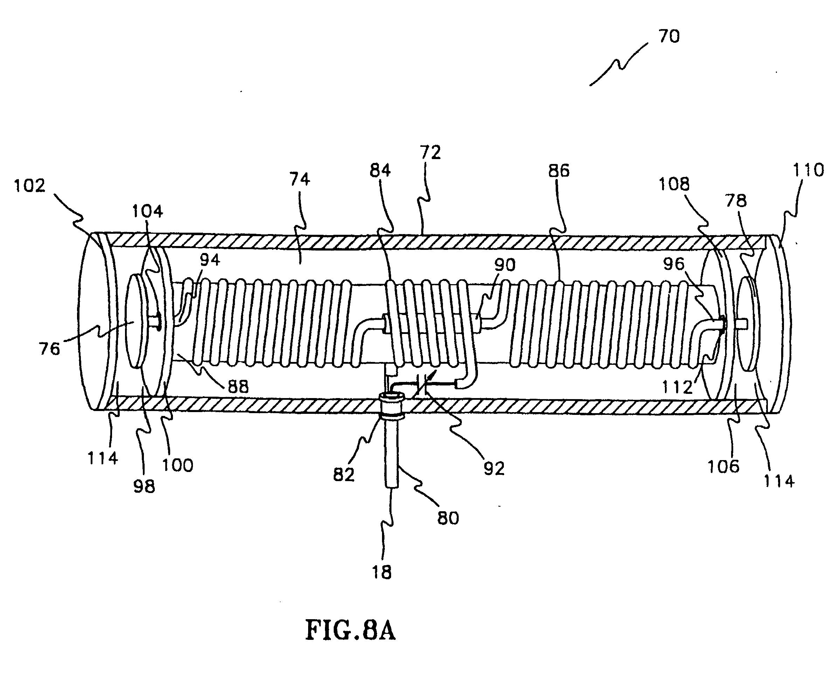

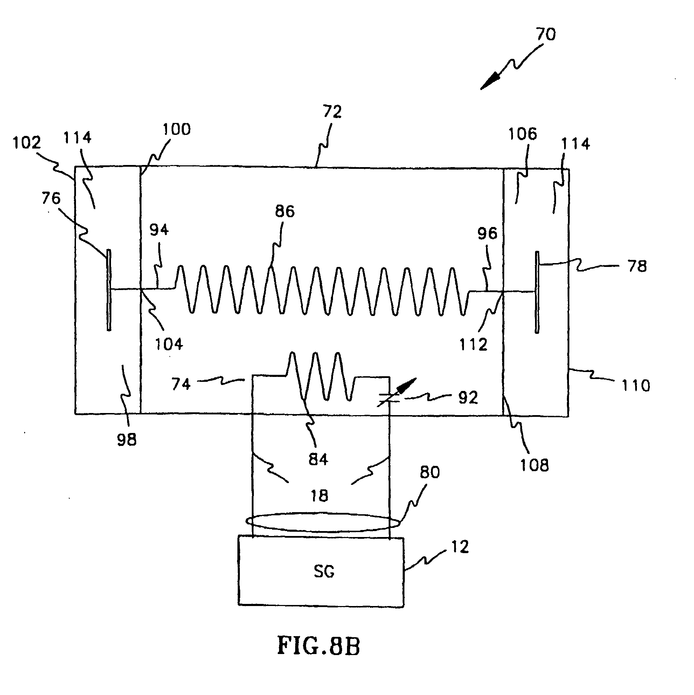

As referenced above in the discussion of Table I, the effectiveness of the delivery system 10 is determined by the treatment parameters which are set according to the characteristics for selected delivery apparatus 14 in solution 16. A first preferred delivery apparatus 70, referenced in Table I as DA I, is shown in Figure 8A. The delivery apparatus 70 is primarily comprised of 1) a water-tight, tubular housing 72, preferably cylindrical, 2) a transformer 74 contained within the housing, 3) first and second voltage probe discs 76 and 78 coupled to the transformer 74 and 4) a coaxial cable 80 coupled to the transformer 74 in the housing 72 through a first water-tight seal 82 and passing the RF-modulated signal 18 from the signal generator 12. As also shown in the schematic representation of Figure 8B, the transformer 74 is comprised of a primary coil 84 inductively coupled to a secondary coil 86, and having voltage probe discs 76 and 78 coupled to the secondary coil 86, preferably at its ends. The primary and secondary coils 84 and 86 are wound around a tube 88 which is preferably formed of a non-conductive material, e.g., PVC. The primary coil 84 is preferably wound around a portion of the secondary coil 86, and is maintained in electrical isolation from the secondary coil 86 by an insulator 90 or alternatively by forming the coils from insulated conductors. The RF-modulated signal 18 is preferably coupled to the primary coil 84 through a high "Q" variable capacitor 92 which is set to a value to match the impedance of the delivery apparatus 70 to the signal generator 12. When the primary coil 84 is powered by the RF-modulated signal 18, magnetic field 20, also referred to as an H-field, is generated primarily from the secondary coil 86 and extends beyond the delivery apparatus 70 and into the solution 16. The secondary coil 86, as a consequence of inductive coupling to the primary coil 84, generates a voltage (measured between electrical ends 94 and 96) having an amplitude larger than the voltage presented to the primary coil 84 from the RF-modulated signal 18. The voltages from electrical ends 94, 96 are coupled to voltage probe discs 76 and 78, respectively. The voltage probe disc 76 is contained within a first non-conductive water-tight chamber 98 formed at a first end of the housing 72. A first non-conductive inner end plate 100 is sealed at a first inner position of the housing 72 and a first non-conductive thin outer end plate 102, proximate to the first end of the housing 72, is sealed at the first end of the housing 72 to form the chamber 98. The electrical end 94 of the secondary coil 86 is coupled to the voltage probe disc 76 through a second water-tight seal 104. Similarly, a second non-conductive water-tight chamber 106 is formed at the second end of the housing 72 between second inner end plate 108 and second outer end plate 110, having the second voltage probe disc 78 contained within and coupled via a third water-tight seal 112 in second inner end plate 108 to electrical end 96. The chambers 98, 106 are preferably filled with a fluid 114, e.g., de-ionized water (DI). It is believed that coupling the electric field 22, into the fluid-filled chambers 98, 106 and through thin outer end plates 102, 110 before coupling the electric field 22 to the solution 16, improves the delivery of the electric field 22 to the solution 16. Also, by maintaining the voltage probe discs 76, 78 in electrical isolation from the solution 16, signal loading is reduced. Sections of the housing 72 which form the first and second water-tight chambers 98, 106 are preferably made from non-conductive materials, e.g., PVC. However, the wall section of housing 72 surrounding transformer 74, i.e., between inner end plates 100, 108 can alternatively be fabricated from non-conductive, e.g., PVC, or conductive materials, e.g., copper.

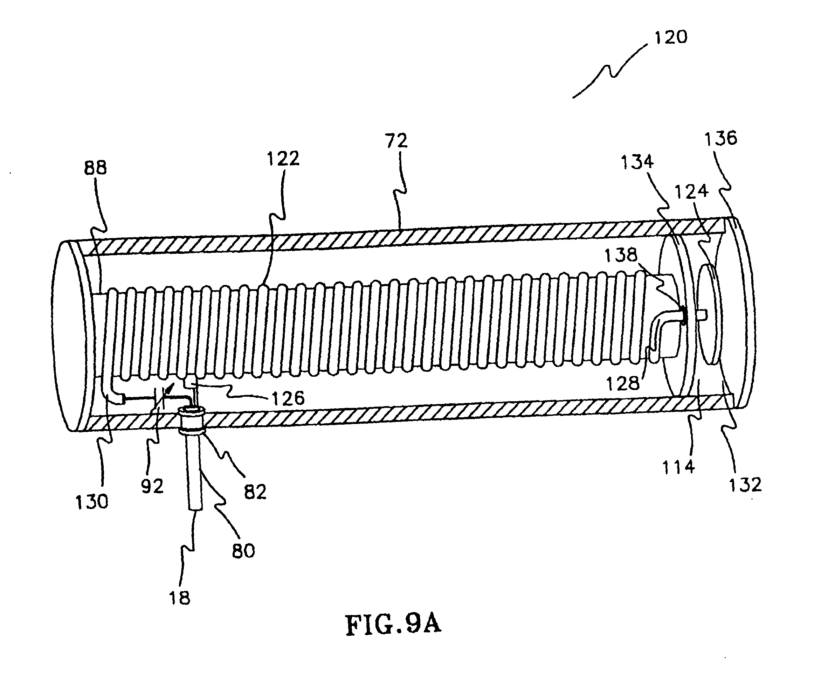

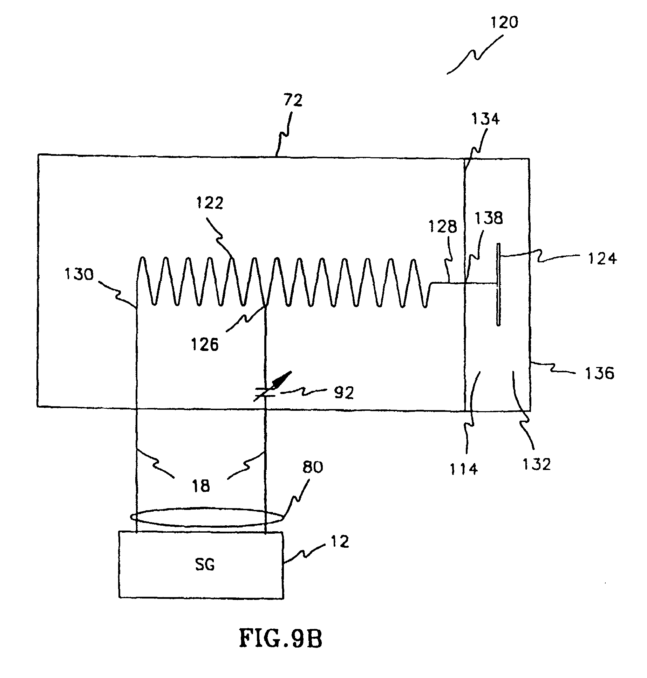

Figures 9A and 9B show a second alternative embodiment 120 of the delivery apparatus 14, referred to as DA II in Table I. The delivery apparatus 120 is primarily comprised of 1) water-tight, tubular housing 72, preferably cylindrical, 2) a tapped coil 122 contained within the housing, 3) a voltage probe disc 124 coupled to a first end of the tapped coil 122 and 4) coaxial cable 80 coupled to the tapped coil 122 within the housing 72 through first water-tight seal 82 and passing the RF-modulated signal 18. The coaxial cable 80 is preferably coupled to a second end of the tapped coil 122 and to an intermediate tap point 126 through high "Q" variable capacitor 92, adjusted to match the impedance of the delivery apparatus 120 to the signal generator 12. The tapped coil 122 generates magnetic field 20 that extends into the solution 16 surrounding the delivery apparatus 120. A voltage measured between points 128 and 130 is inductively generated by the tapped coil 122 and is greater in amplitude than the RF-modulated signal 18 input to the tapped coil 122. The voltage at point 128 is coupled to the voltage probe disc 124, contained within a water-tight chamber 132 at the first end of the water-tight housing 72. A non-conductive inner end plate 134 is sealed at a first inner position of the housing 72 and a non-conductive thin outer end plate 136, proximate to the first end of the housing 72, is sealed at the first end of the housing 72 to form the water-tight chamber 132. The voltage generated at the first end of the tapped coil 122 is coupled to the voltage probe disc 124 through a second water-tight seal 138. The chamber 132 is preferably filled with fluid 114, e.g., de-ionized water (DI). As with the previously described embodiment, it is believed that this structure improves the coupling of the electric field 22 into the solution 16, while minimizing the electrical load. As previously described, the section of the housing 72 which forms the water-tight chamber 132 is preferably made from a non-conductive material, e.g., PVC. However, the wall section of housing 72 surrounding the tapped coil 122 can alternatively be fabricated from a non-conductive, e.g., PVC, or conductive, e.g., copper, material.

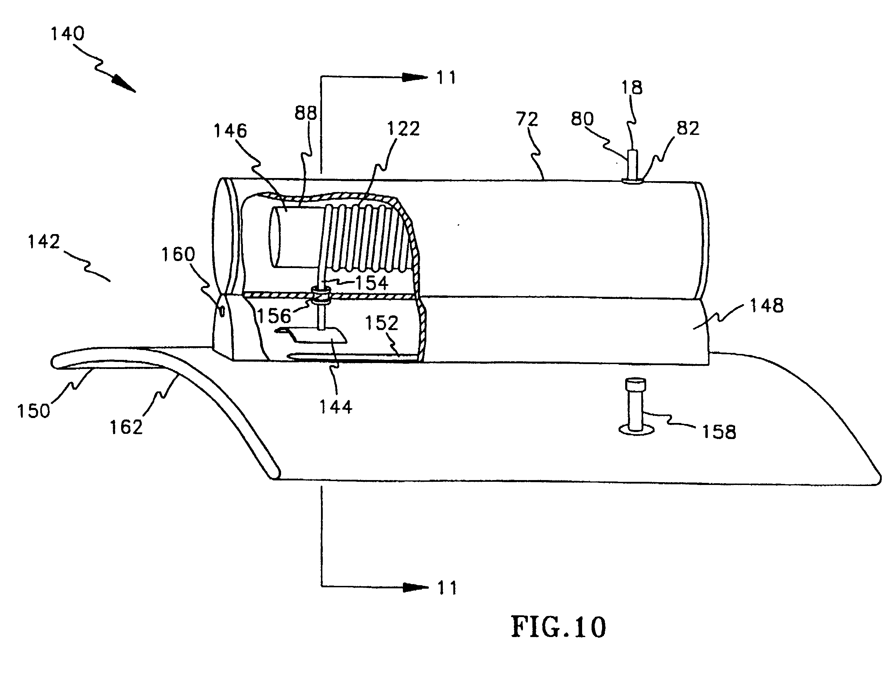

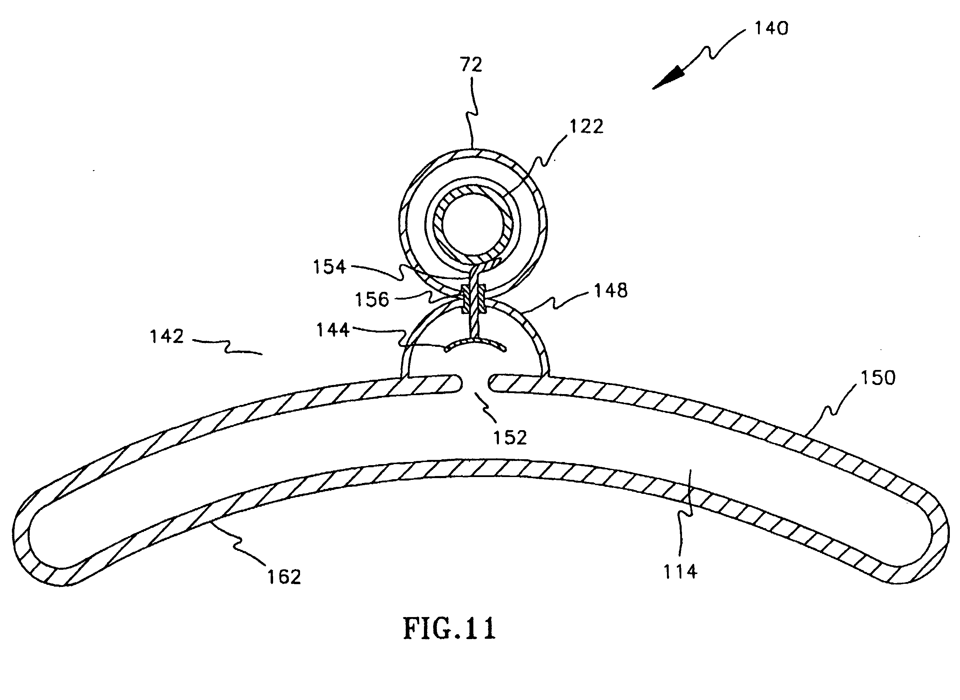

Figures 10 and 11 show a third alternative embodiment 140 of delivery apparatus 14. The delivery apparatus 140 is primarily comprised of 1) water-tight, tubular housing 72, preferably cylindrical, 2) tapped coil 122 contained within the housing, 3) a voltage coupling structure 142 containing a voltage coupling plate 144 coupled to a first end 146 of the tapped coil 122, and 4) coaxial cable 80 coupled to the tapped coil 122 in the housing 72 through first water-tight seal 82 and passing the RF-modulated signal 18. Essentially, the structure of the water-tight housing 72 and the tapped coil 122 are identical with the previously-described embodiment 120 shown in Figure 9A. However, in this embodiment, the additional voltage coupling structure 142 is comprised of a second housing 148 coupled to a bladder 150, preferably flexible, forming a water-tight assembly with a fluid coupling passageway 152 inbetween. The voltage coupling plate 144 is contained within the second housing 148 and is electrically coupled to the first end 146 of the tapped coil 122 using conductor 154 which passes through a second water-tight seal 156. The voltage coupling structure 142 is preferably filled with fluid 114, e.g., de-ionized water (DI), using a filler tube and cap 158. While the voltage coupling structure 142 is being filled with fluid 114, air within is vented through an exhaust port 160. The voltage coupling structure 142 and specifically the bladder 150 are preferably formed as an arcuate surface 162 to match an outer surface, e.g., a curved tank or pipe, thus facilitating treatment of the solution 16 contained within. Thus, in this embodiment, the solution 16 is treated with magnetic and electric fields, respectively 20 and 22, without the delivery apparatus 140 having contact with the solution 16. As previously described, housing 72 may alternatively be fabricated from a non-conductive, e.g., PVC, or conductive, e.g., copper, material.

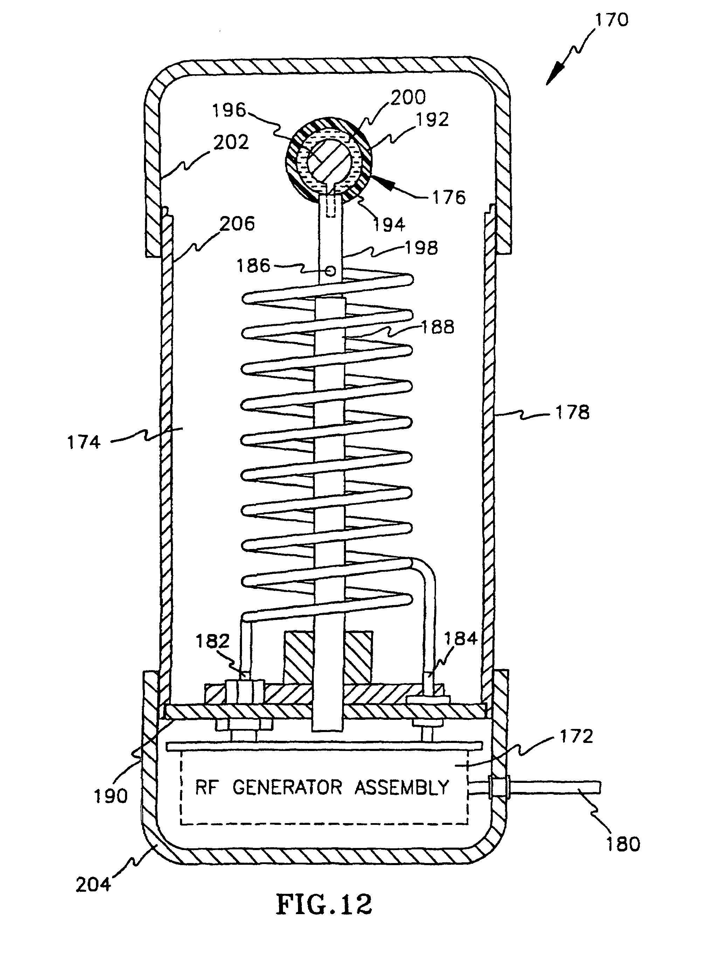

Figure 12 shows a fourth alternative embodiment 170 of delivery apparatus 14. The delivery apparatus 170 is primarily comprised of an RF generator assembly 172, 2) a helical resonator 174, and 3) a voltage probe assembly 176, all contained within a water-tight housing 178. The RF generator assembly 172, is somewhat analogous to the previously described signal generator 12 in that it generates an RF-modulated signal. A power control cable 180 delivers modulated power, i.e., adjustable in voltage and duty cycle, to the RF generator assembly 172 to cause the RF generator assembly to deliver RF-modulated energy via conductors 182, 184 to the helical resonator 174, i.e., a tapped coil. The close proximity of the RF generator assembly 172 to the helical resonator 174 improves signal delivery. The helical resonator 174, generates a high voltage signal at its end 186 to the voltage probe assembly 176 in a similar manner to the previously described tapped coil 122. The helical resonator 174 is preferably formed of a metallic coil formed from a length of conductive wire, e.g., copper, having an unwound length of one quarter of the wavelength of the RF signal (e.g., approximately 8.62 feet @27.225 MHz). A nonconductive, e.g., polycarbonate, adjustment rod 188 is coupled to the end 186 of the helical resonator 174 and adjustably passes through end plate 190. By altering the relative position of the adjustment rod 188, the linear size of the helical resonator 174 is altered to adjust the impedance of the resonator 174 and improve signal matching to the RF generator assembly 172.

The voltage probe assembly 176 is primarily comprised of 1) a non-conductive, e.g., Teflon, outer hollow housing 192, preferably spherical, forming a matching chamber 194 within, 2) a conductive, e.g., gold-plated brass, voltage probe 196 contained within the housing 192, and a conductive standoff 198, coupled at a first end to the voltage probe 196, e.g., via a threaded coupling, and forming a water-tight seal to the housing 192. The second end of the conductive standoff 198 is coupled to end 186 of the helical resonator 174 providing a conductive path between the resonator 174 and the voltage probe 196. A fluid 200, e.g., de-ionized water (DI), surrounds the voltage probe 196 within the chamber 194.

The structure of the water-tight housing 178 is divided into three sections. In first and second sections 202, 204 surrounding the voltage probe assembly 176 and the RF generator assembly 172, the walls of the housing 178 are formed of a non-conductive material, e.g., plastic. However, the third section 206 of the housing 178 forms a shield, preferably cylindrical and fabricated from a conductive material, e.g., copper, to contain the electrical field.

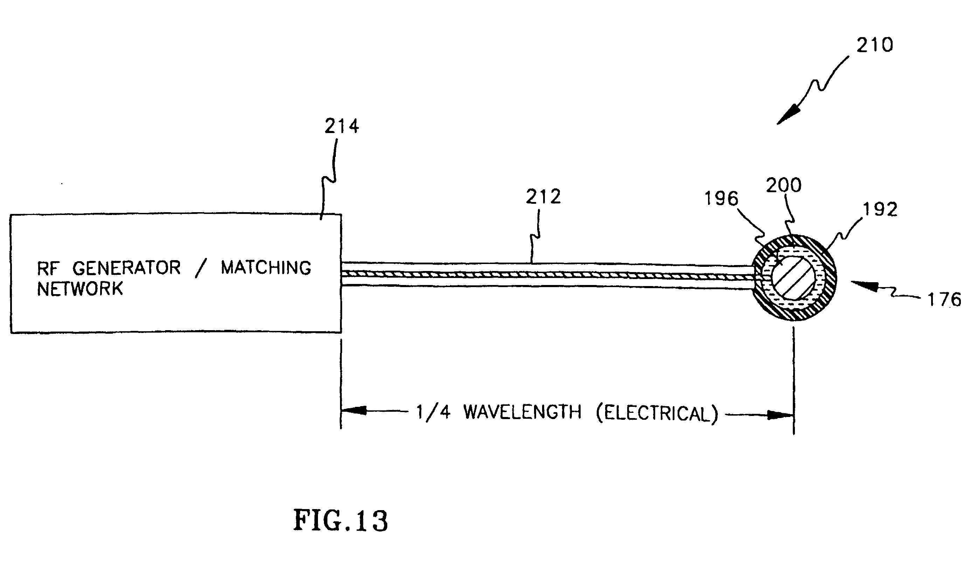

Figure 13 shows a fifth alternative embodiment 210 of delivery apparatus 14. This embodiment is primarily comprised of the previously described voltage probe assembly 176 coupled via a shielded cable 212 having a length preferably equal to 1/4 of the wavelength of the RF signal (e.g., approximately 7.9 feet @27.225 MHz and differing from the prior embodiment due to the characteristics of the cable) to an RF generator/matching network 214, similar in function and structure to the RF generator assembly 172 but physically remote from the voltage probe assembly.

As disclosed above, the characteristics of a solution, e.g., a fluid or gas, can be desirably altered by treating a solution with RF-modulated energy. It has been shown that the effects of treating a solution with RF-modulated energy endure for a substantial period of time, i.e., minutes as opposed to microseconds. Thus, further experimentation proceeded to determine any additional aspects of this treatment. Consequently, it was determined that if a first solution, i.e., a primary solution, is treated and subsequently transported to a remote location and placed proximate to a secondary solution, the characteristics of the secondary solution are similarly effected, e.g., secondary emissions from the primary solution effect the characteristics of the secondary solution. The following experiments were conducted:

Solution p (primary) was treated by delivering a high voltage electromagnetic signal into a container holding solution p. A portion of the treated solution p was then transported to another room which was approximately 50 feet away and placed in a bottle which was placed near a beaker which contained a solution s (secondary) of nitric acid. A pH electrode was located in the secondary beaker during this experiment. Before placing solution p near the beaker with solution s, the pH was constant at 4.341±0.002 for at least 30 minutes. Fifteen minutes after placing solution p near the beaker with solution s, the pH was fluctuating and afterwards started to continuously drift downwards, changing to a pH of 4.128 after 2 hours of exposure. This experiment was repeated three times.

In a similar experiment, 20 mg of rutile was placed in a beaker (solution s). After 24 hours, its zeta potential was measured. The zeta potential remained at 7±2 mV for at least one hour. After that, a container of solution p which had been treated with a high voltage electromagnetic signal was placed in a bottle near solution s. The zeta potential of rutile in solution s started to fluctuate between 22 and 6 mv with time after exposure, i.e., being placed in close proximity to solution p. This fluctuation persisted for at least 2 hours. Atomic force microscopy was used to measure the surface forces at the atomic interface of zinc colloids and a solid silica surface. A non-energized solution (solution s) consistently exhibited positive force vectors out to a distance of 30 nanometers from the surface. The same solution was exposed to bottles of treated water (solution p) for a period of 20 minutes and the force vectors reversed their direction, becoming negative up to 9 nanometers, where it remained at 0 out to a distance of 100 nanometers.

In another experiment, tap water was placed into two glass beakers (#1 and #2) of equal diameter. The water content in each beaker was measured and equalized to 100±.011 grams. While, beaker #1 was kept isolated from the treated water, beaker #2 was exposed (e.g., by secondary emissions) to treated water (solution p). Both beakers were allowed to stand and their weight was measured at 1 hour intervals in two controlled environments (30°C with no ventilation but open to the atmosphere). Beaker #1 (the untreated beaker) lost weight at 1.84 times the rate of beaker #2. The experiment was repeated ten times in three hours with results repeating within ±3%.

In yet another experiment, surface tension was recorded with secondary water and oscillations occurring from 75 mN/m (millinewtons/meter) to 77.5 mN/m.

In yet another similar experiment, a precipitation of calcium carbonate was measured by measuring its turbidity upon mixing 10 ml of 0.003 M calcium nitrate and 10 ml of 0.005 M sodium carbonate. The turbidity first increased and after reaching a plateau decreased with time (e.g., a nucleation and precipitation reaction). In a next experiment, the solutions of calcium nitrate and sodium carbonate (solution s) were exposed to a similarly treated solution p for a period of ten minutes prior to mixing. The maximum turbidity was observed to decrease significantly in the presence of secondary emissions. Particles precipitated under exposure to solution p exhibited a larger mean particle size (as measured by optical microscopy).

The effects of shielding barriers on secondary emissions from solution p were also studied. From these studies it was determined that it was preferable to use a metallic shield, e.g., copper, *µ* metal, etc., to limit the secondary emissions from treating any solutions other than the secondary solution.

To evaluate the strength of the secondary emissions, pH was again measured versus time in solution s. In one experiment, solution p was treated with electromagnetic energy and a bottle in which solution p was contained was enclosed in three sheets of aluminum foil. The pH of solution s held constant at 4.349±0.002 for at least 30 minutes. After placing a bottle with solution p nearby, the pH of solution s changed from 4.349 to 4.193 in 2 hours. This experiment was repeated three times with a reproducibility of ±0.01 pH units.

In yet another experiment, the bottle with treated solution p was placed inside an aluminum container with 1/8 inch thick walls. The pH of solution s was initially constant at 4.160, but 1 hour after placing solution p nearby (inside a container) it changed to 4.195 and it continued to increase.

In yet another experiment, the bottle with treated solution p was placed inside a stainless steel container with 1/8 inch thick walls. The pH of solution s was constant at 4.420. After solution p inside the container was placed nearby, the pH of solution s changed from pH 4.420 to 4.469.

From these experiments, it was concluded that a mechanism existed where once a primary solution was treated with electromagnetic radiation, that transporting the primary solution proximate to a secondary solution could treat the secondary solution, e.g., by secondary emissions from the primary solution.

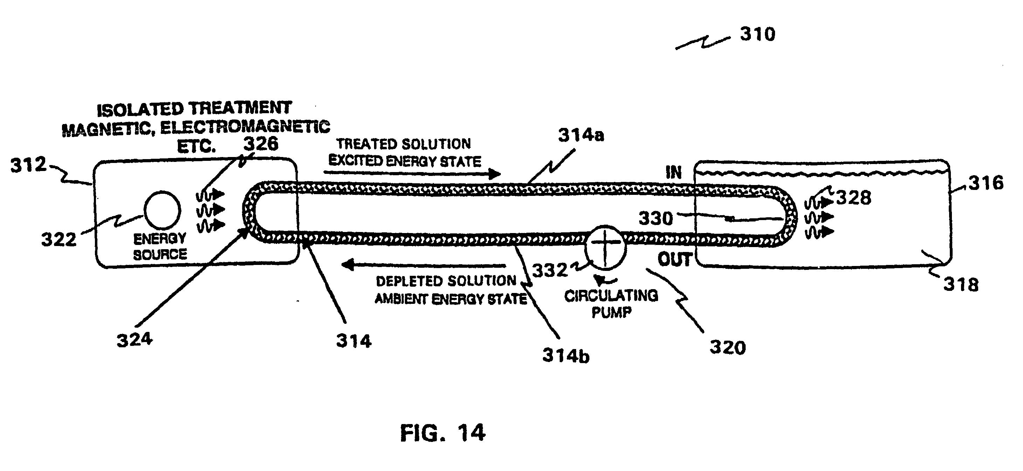

Figure 14 shows a block diagram of a treatment system 310 that embodies the present invention, primarily comprised of: 1) a treatment station 312 for treating a primary solution 314, 2) a process station 316 containing a secondary solution 318 that is to be treated, where the process station 316 is preferably located remote from the treatment station 312, and 3) a transporting apparatus 320 for transporting the treated primary solution 314 proximate to the secondary solution 318. The treatment station 312 preferably contains a delivery apparatus 322 for generating electromagnetic energy and treating the primary solution 314. An exemplary delivery apparatus 140 (see Figure 11) delivers electromagnetic energy into an energy receiving primary solution (see fluid 114 in Figure 11) contained within the bladder 150 preferably surrounding a pipe 324 (see Figure 14). The primary solution 314 contained within the pipe 324 receives radiation 326 which modifies the primary solution 314. Consequently, the primary solution 314 can then emit secondary radiation 328 (actually tertiary radiation relative to the original radiation into the energy receiving primary solution 114) to treat the secondary solution 318 from a radiator loop 330.

The primary solution 314 is preferably recirculated between the treatment station 312 and the process station 316 by passing the primary solution 314 within the pipe 324 using an apparatus for maintaining flow of the primary solution, e.g., a circulating pump 332. Although, it is preferable to recirculate the primary solution 314, it is not necessary to practice the present invention. Embodiments which unidirectionally transport the primary solution 314 from the treatment station 312 to the process station 316 are also considered within the scope of the present invention. Embodiments which recirculate the primary solution are believed to be more efficient. Not all of the energy delivered into the primary solution 314 can be imparted to the secondary solution 318 when solution 314a is transported proximate to the secondary solution 318. Thus, the primary solution 314 will still retain some of the RF-modulated energy imparted to it by the delivery apparatus 322. Consequently, by recirculating the partially depleted primary solution 314b back to the delivery apparatus, it will take less energy to re-treat the primary solution 314b.

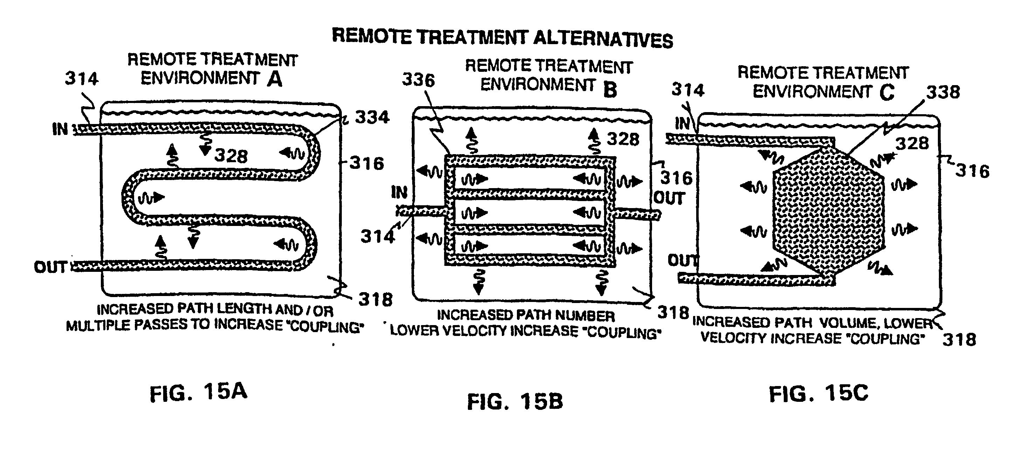

The extent of treatment of the secondary solution is somewhat dependent upon the proximity and duration of exposure of the primary solution 314 to the secondary solution 318. Figures 15A-15C show exemplary radiators 334, 336, 338 for exposing the secondary solution 318 to radiation 328 from the primary solution 314. Radiator 334 comprises an extended radiator loop 330 which increases the coupling, i.e., the efficacy of treating the secondary solution from the primary solution, due to its increase in path length and/or having multiple passes compared to the single loop of the radiator loop 330 implementation. Radiator 336 increases the number of paths and thus the volume of the secondary solution 318 being directly treated by secondary emissions 328 from the primary solution 314. However, due to the increase in the number of paths, the solution's velocity is correspondingly decreased. This decrease in velocity exposes the secondary solution 318 to each portion of the primary solution 314 for a longer period of time. Radiator 338 exposes a larger volume by having a large crosssectional surface area (e.g., a hexagon as shown in this example) that also enables a large volume of secondary solution to be directly subjected to secondary radiation 328 from the primary solution 314. Again, this increased exposure area results in a lower velocity for the primary solution 314 within the radiator 338. One of ordinary skill in the art can envision other radiator configurations that trade off the amount of exposure and the velocity of the primary solution 314.

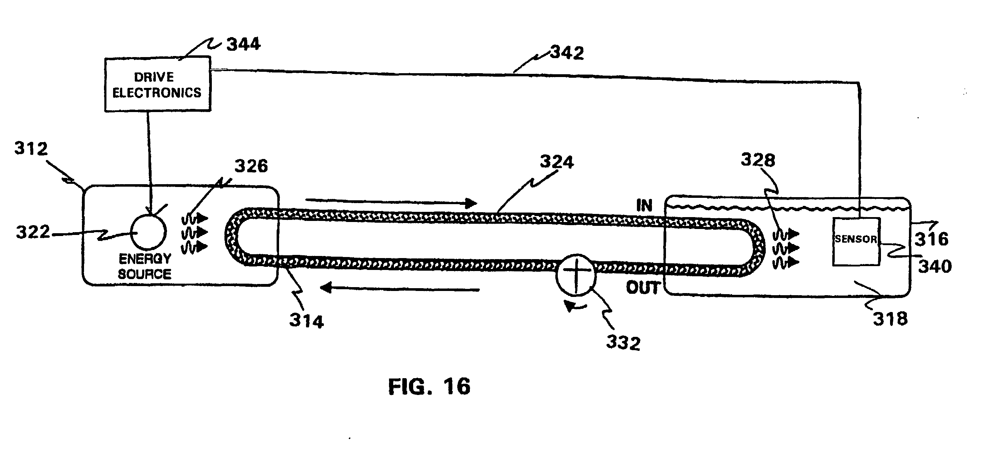

As disclosed above, a feedback mechanism is preferably used to determine the optimal treatment level for the solution. In the present invention, it is the treatment level of primary solution 314 that is preferably modified in response to secondary effects of treating the secondary solution 318. Therefore as shown in Figure 16, a sensor 340 is preferably placed in the secondary solution 318 and coupled via feedback signal 342 to drive electronics 344 (for example, see signal generator 12 in Figure 6) which drives the delivery apparatus 322. The sensor 340 can alternatively measure pH, zeta potential or any other measure that determines the amount of treatment required. As described above, the drive electronics 344 can alter the duty cycle, frequency, amplitude, etc. of the RF-modulated energy applied to the delivery apparatus 322. Additionally, the recirculation speed of the primary solution 314 can be altered by changing the speed of the circulating pump 332 in response to the feedback signal 342. Although placing the feedback sensor 340 in the secondary solution 318 is preferred, feedback control can also be achieved with a feedback sensor placed in the primary solution 314 to measure the amount of treatment of the primary solution 314 (which corresponds to the amount of treatment of the secondary solution 318).

Once the secondary solution is treated, it can beneficially modify its performance in various processes. An exemplary subset is described below in reference to Figure 14:

### 1. Changing Colloid Behavior in Cooling / Service Water Systems (Scale Control). e.g., Cooling Tower Descaling

The energy source, e.g., the delivery apparatus 322, stimulates the primary solution 314 using a magnetic, electromagnetic, or electric field, a visible or invisible broadband or monochromatic light or any other energy source. The primary solution 314 is thus placed into an altered energy state, and is transferred by a pump 332 or other means through closed loop pipe 324, tubing, etc. into the sump or holding tank 316 containing the coolant secondary solution 318. Energy emanating from the primary solution 314 is then radiated into the secondary solution 318, altering the physical characteristics of the secondary solution 318, i.e., pH, conductivity, zeta potential, surface tension, hydration force or any other characteristic of the secondary solution 318 to effect the attractiveness of colloidal particles in the secondary solution 318 to surfaces in the system. By applying the proper energy profile, scale particles will be repelled from surfaces contacting the secondary solution 318, inhibiting the formation of new scale, and promoting the removal of pre-existing scale buildup.

### 2. Printing Ink Treatment (Changing Font/ Surface Adhesion Characteristics)

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the sump or holding tank 316 containing the ink or font secondary solution 318. Energy emanating from the primary solution 314 is then radiated into the secondary solution 318, altering the physical characteristics of the secondary solution 318, i.e., pH, conductivity, zeta potential, surface tension, hydration force or any other characteristic of the secondary solution 318 to effect the attractiveness of colloidal particles in the primary solution 314 to the print medium. By applying the proper energy profile, ink or toner particles will be attracted to the printing media, resulting in improved print density, or more economical usage of ink or fonts.

### 3. De-inking of Pulp in Paper / Cardboard Recycling Processing / Removal of Ink or other Particles from Paper Slurry

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the process container tank 316 containing the process slurry 318. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the attractiveness of colloidal particles in the secondary solution 318 to each other or to filter, skimmer, or other process elements. By applying the proper energy profile, ink, toner, or other particles will be either attracted to filter media, or be agglomerated as a froth at the surface to be skimmed off and disposed of.

### 4. Industrial Chemistry Process Enhancements / Chemical Process Synthesis Treatment

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the process container tank 316 containing the process solution 318. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to stimulate certain chemical reactions, or cause some enhancement of catalytic or other desired changes of chemistry.

### 5. Treating Water for Improvement of Strength of Concrete / Aggregate Mixes

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the process container/tank 316 containing the mix water 318. Energy emanating from the primary solution 314 is then radiated into the secondary solution 318 altering the physical characteristics of the secondary solution 318, i.e., pH, conductivity, zeta potential, viscosity, surface tension, hydration force or any other characteristic of the secondary solution 318 to alter the curing time, the cured strength, the permeability, the porosity, or any other desirable effects of the finished concrete, including eliminating common salt types of additives which can attack and weaken reinforcing and metallic members in the pour.

### 6. Water Treatment to Enhance Plant Growth Cycles / Treatment of Water Agriculture / Plant Biology

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the process container/tank 316 containing the irrigation water 318. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to alter plant growth rates, plant size, fruit size and/or quality, plant succeptability to disease or pests, plant water and nutrient requirements, and any other desirable effects on the plant species.

### 7. Medical / Biological Transfer and Treatment Techniques

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the treatment head / culture growth area / implant 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to alter cell growth rates, inhibit the growth of damaged or aberrant cells, stimulate the immune system function, stimulate the mending of broken bones, allow the removal of calcium deposits such as spurs, or allow removal of arterial plaque.

### 8. Wastewater / Effluent Treatment Using Energy Exchanger System

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the treatment pond / sump / stream 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect precipitation, flocculation or agglomeration of particles suspended in the wastewater effluent, allowing them to be sedimented, skimmed or filtered from the solution.

### 9. Liquid Hydrocarbon Fuel Treatment for Improved Combustion

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the fuel storage tank 316, an in-line fuel treatment cell or into the carburetion or induction systems. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 which to modify complex hydrocarbon chains by cracking, molecular re-organization or attachment of OH radicals to improve the combustibility, modify the burn time or in any other way improve fuel economy or lower unwanted emissions of pollutants, including reduction of oxides of nitrogen, unburnt carbon or any other undesirable by-products of combustion.

### 10. Energy Treatment for an Icemaking Feedwater / Process

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the icemaker feedwater holding tank 316, or icemaker water sump. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the crystalline structure of ice to alter visual quality, melt time, entrainment of gasses, or other qualities of the ice.

### 11. Energetic Treatment of Steam / Water Vapor / Condensate Systems for Controlling Scale and Corrosion

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. or water sump. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the formation of scale or corrosion in boiler tubes / steam / condensate systems in boilers, industrial steam / low pressure vapor systems or other heat transfer surfaces.

### 12. System for Energetic Treatment of Injected Fuel Additives

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the injector solution additive holding tank 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of that solution when injected into the fuel source, induction system or combustion chamber, to improve fuel characteristics, reduce unwanted exhaust emissions, modify fuel burn characteristics, reduce pinging and knock or otherwise improve engine performance.

### 13. Treatment of Water in De-Salination Systems

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the de-salination system inlet water 318. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of salt water such that colloidal particles will flocculate or agglomerate allowing pre-filtration of the water by such means as large mesh mechanical filtration or centrifugation.

### 14. Treatment of Chemistry in Semiconductor Deposition Systems

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the deposition system holding tank 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of surface attraction to deposition solution colloidal particles, such that thinner and more uniform coatings can be applied.

### 15. Enhancement in Photographic Emulsions / Photodevelopment Cycles, e.g., in Semiconductor Deposition Systems

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the deposition system holding tank 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of the quality and size distribution of colloidal particles in photographic emulsions to improve grain size and color rendition and to treat various solutions used in development and processing to improve the rate of absorption / uniformity of development to enhance image quality and throughput times.

### 16. Improvement of Paint Application Adhesion and Curing

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the system holding tank 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of the quality and size distribution of colloidal particles in paint emulsions during manufacture and application of paints to control pigment size distribution, base polymer characteristics as well as sag, coating thickness, drying time, finish quality, and hardness.

### 17. Enhancement of Electroplating Processes

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the plating solution / plating tank 316. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the characteristics of the plating solution to control the purity, density and porosity of electroplated surfaces.

### 18. Treatment of Water to Reduce Evaporative Loss in Agricultural Irrigation

The energy source, e.g., the delivery apparatus 322, stimulates the primary solution 314 using a magnetic, electromagnetic, or electric field, visible or invisible broadband or monochromatic light or any other energy source. The primary solution 314 is thus placed into an altered energy state, and is transferred by a pump 332 or other means through closed loop pipe 324, tubing, etc. into the process container/tank 316 containing the irrigation water 318. Energy emanating from the primary solution 314 is then radiated into the secondary solution 318, altering the physical characteristics of the secondary solution 318, i.e., pH, conductivity, zeta potential, viscosity, surface tension, hydration force or any other characteristic of the secondary solution 318 to effect the rate at which water is absorbed by soil growth medium and reduce water usage and thus increase profitability of agri-business.

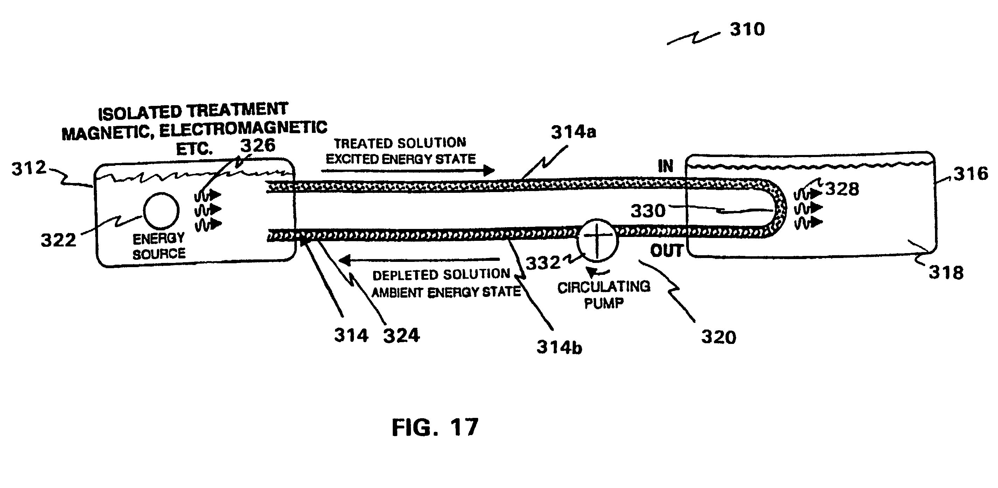

While it is preferable to recirculate a primary solution 314 which is isolated from the secondary solution 318 between the treatment station 312 and the process station 316, any system that transports a solution between stations 312 and 316 to facilitate treatment by secondary emissions is considered to be within the scope of the present invention. Figures 17-20 are exemplary embodiments of systems that treat a secondary solution 318 by causing the treated primary solution 314 to be located proximate to the secondary solution 318.

For example only, Figure 17 shows a treatment system 310 where the primary solution 314 is contained within the treatment station 312. The treated primary solution 314 is recirculated in pipe 324 between the treatment station 312 and the process station 316 where the secondary solution 318 is treated. In this example, the primary 314 and secondary 318 solutions are isolated from each other.

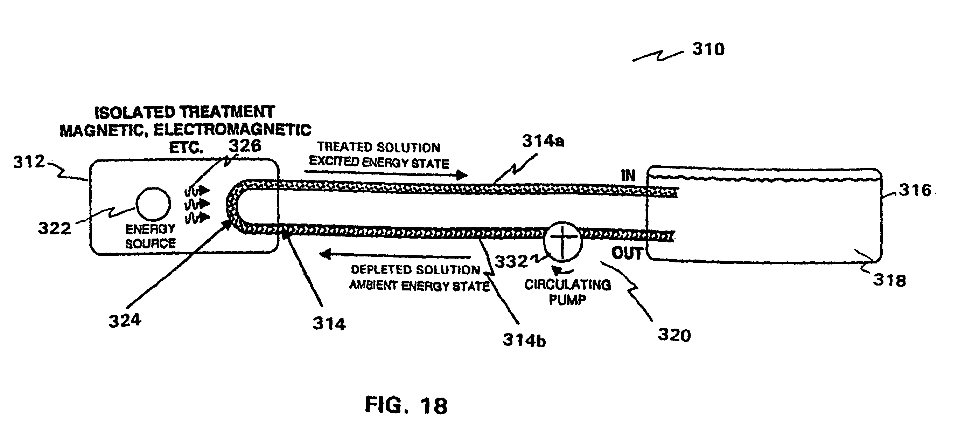

Conversely, Figure 18 shows a treatment system 310 where the secondary solution 318 is recirculated in pipe 324 between the process station 316 and the treatment station 312. At the treatment station 312, the secondary solution 318 is treated by secondary emissions from a primary solution 314. In this example, the primary solution 314 is alternatively contained within a tank in the treatment station 312 or is the solution contained within the delivery apparatus 322 (e.g., see fluid 114 in Figure 11). In either case, the primary 314 and secondary 318 solutions are isolated from each other.

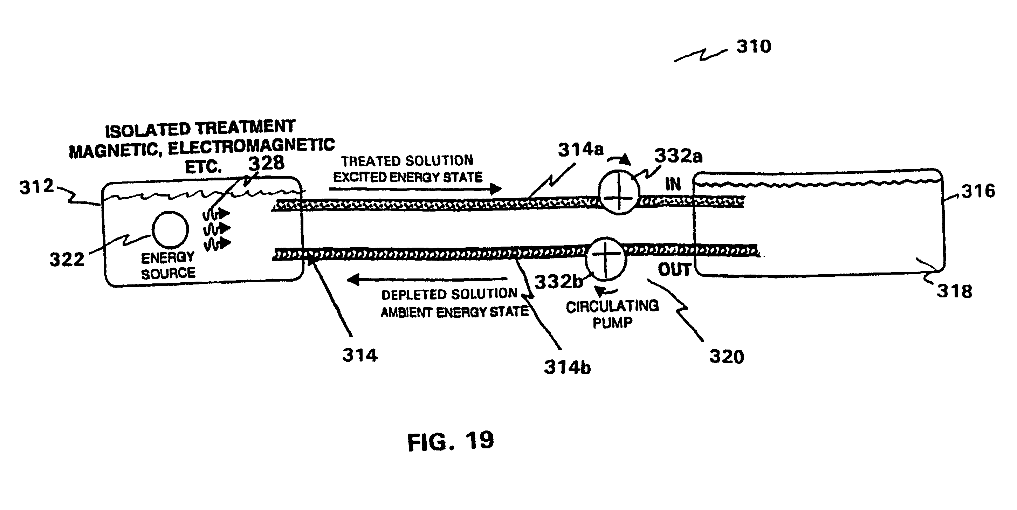

Figure 19 shows a treatment system 310 where the secondary solution 318 is passed bidirectionally between the process station 316 and the treatment station 312 using a pair of circulating pumps 332a and 332b. In this example, the primary solution 314 is the solution contained within the delivery apparatus 322 (see fluid 114 in Figure 11), isolated from the secondary solution 318. The treated secondary solution within the tank at the treatment station 312 is mixed with untreated secondary solution within the tank at the process station 316 and consequentially treats the remaining secondary solution.

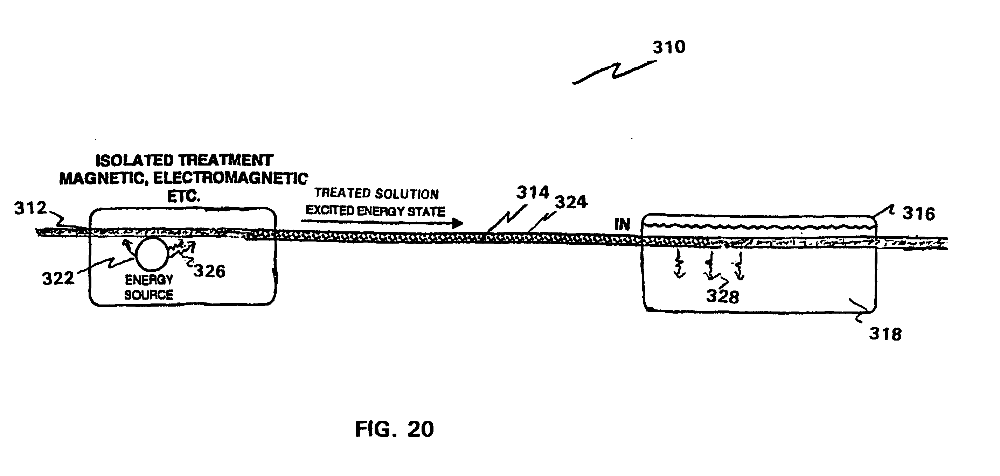

Figure 20 shows a treatment system 310 where a primary solution 314 passes unidirectionally from the treatment station 312 where it is treated using the delivery apparatus 322 with RF-modulated energy to the process station 316 where the secondary solution 318 is treated with secondary radiation 326 from the primary solution 314.

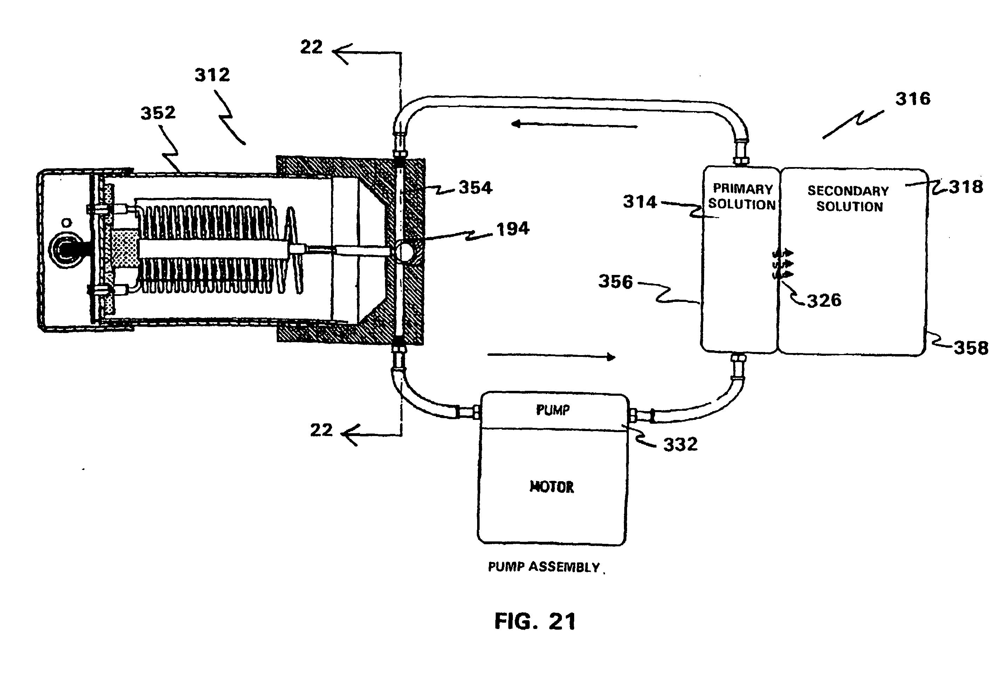

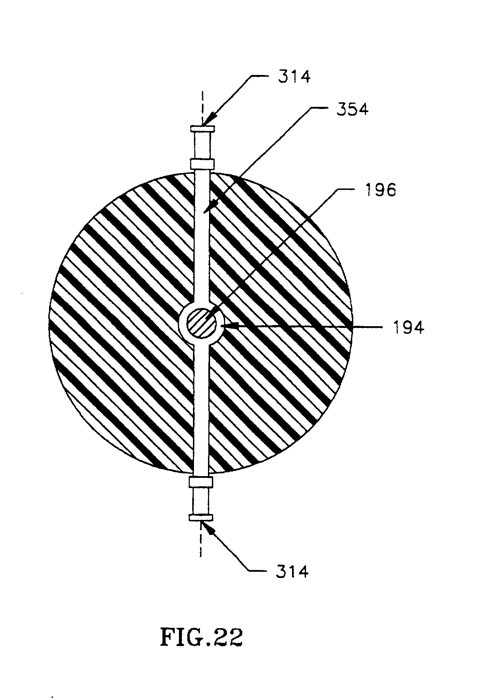

Figure 21 shows an exemplary system 350 for practicing the above described method. In this system, a delivery apparatus 352, similar to that described in reference to Figure 12, is modified to permit a recirculation pipe 354 to pass the primary solution 314 through the chamber 194 surrounding the voltage probe 196. (See Figure 22 for a cross sectional end view of the delivery apparatus 352 to see the relationship between the recirculation pipe 354 and the chamber 194). As previously described, the voltage probe 196 is subjected to RF-modulated energy which treats the surrounding solution in the chamber 194. However, in this embodiment the surrounding primary solution 314 is recirculated through pipes 354 and 324 using the circulating pump 332. The recirculated primary solution 314 is circulated through a remote primary solution tank 356, somewhat analogous to the previously-described radiator loop 330, that is located in close proximity to a process solution tank 358 which contains the secondary solution 318. In this embodiment, the combination of the primary solution tank 356 and the process solution tank 358 form the process station 316. Due to the quantity of treated primary solution 314 being present in the primary solution tank 356 and its proximity to the process solution tank 358, sufficient secondary radiation 326 can remotely treat the secondary solution 318 in the process station 316.

It has been disclosed that secondary radiation from a treated primary solution can modify the characteristics of a secondary solution placed in close proximity. Additionally, it has been disclosed that shielding can effect this transfer of secondary radiation. Therefore, it is believed to be preferable to shield the portions of the pipe 324 between the treatment station 312 and the process station 316 (see Figure 16) that contain the recirculated treated primary solution as well as the treatment station 312 and the drive electronics 344 to limit the exposure by secondary radiation of any additional solutions that might be located proximate to the treatment system 310.

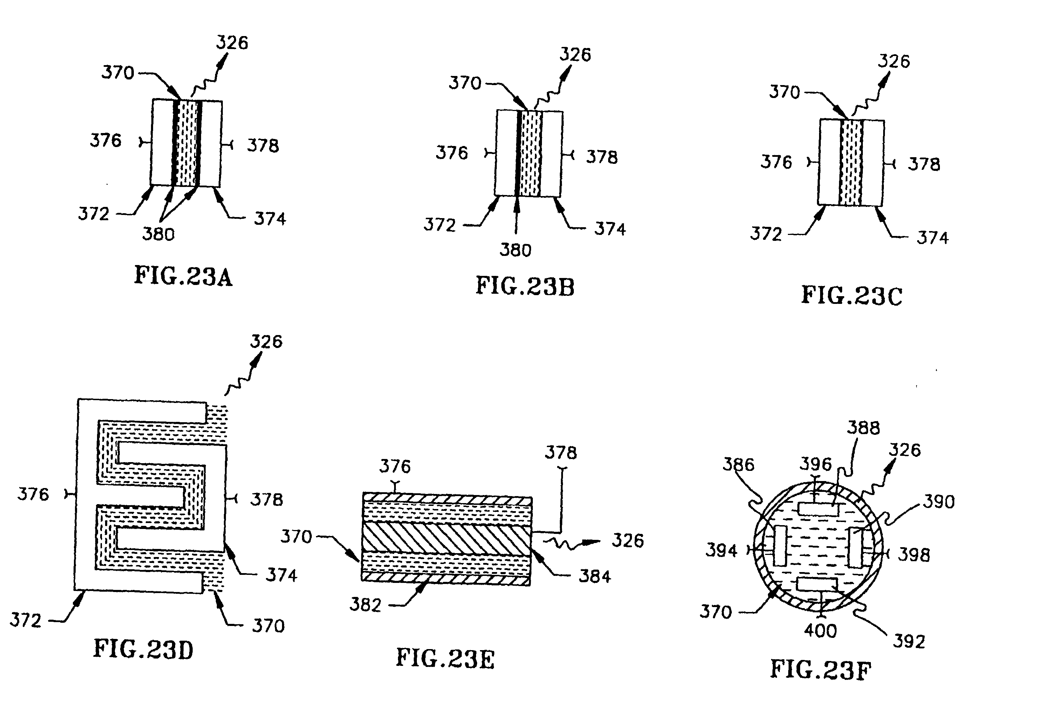

While the presently-preferred embodiments of delivery apparatus have been described above, Figures 23A-23F show some additional design criteria that can be used in constructing additional delivery apparatus that treat a fluid, i.e., the primary solution 314, that is then used to treat a secondary solution 318.

In Figure 23A, a fluid 370 is contained or circulated between two metallic plates 372 and 374 independently driven by RF-modulated signals 376 and 378. Each plate is preferably covered with a thin dielectric coating 380 such that there is no galvanic connection between fluid 370 and the field plates 372 or 374.

In Figure 23B, the fluid 370 is contained or circulated between the two metallic plates 372 and 374 independently driven by RF-modulated signals 376 and 378. In this embodiment, only one plate, e.g., 372, is covered with a thin dielectric coating 380 such that there is a galvanic connection between the fluid 370 and one field plate, e.g., 372, only.

In Figure 23C, the fluid 370 is contained or circulated between the two metallic plates 372 and 374 independently driven by RF-modulated signals 376 and 378. However, in this embodiment, neither plate is coated with a dielectric coating and thus each plate has a galvanic connection to the fluid 370.

In Figure 23D, the fluid 370 is contained or circulated between the two metallic plates 372 and 374 independently driven by RF-modulated signals 376 and 378. In this embodiment, the surface area of the metallic plates, proximate to the fluid 370, is extended to increase exposure of the fluid 370 to RF-modulated energy from signals 376 and 378. The metallic plates and may have coatings as described in reference to Figures 23A-23C.

In Figure 23E, the fluid 370 is contained or circulated through a conductive tube or pipe 382 having a center electrode 384. The conductive pipe 382 and the center electrode 384 are independently driven by RF-modulated signals 376 and 378. The conductive pipe 382 and the center electrode 384 may have coatings as described in reference to Figures 23A-23C.

In Figure 23F, the fluid 370 is contained or circulated between multiple metallic plates 386, 388, 390 and 392 independently driven by RF-modulated signals 394, 396, 398 and 400. The metallic plates may have dielectric coatings as described in reference to Figures 23A-23C. Two of more of the RF-modulated signals are preferably phase shifted to create a rotating electric field in the fluid 370.

Although the present invention has been described in detail with reference only to the presently-preferred embodiments, those of ordinary skill in the art will appreciate that various modifications can be made without departing from the invention. For example, one of ordinary skill in the art can envision other systems that cause the primary 314 and secondary 318 solutions to be transported proximate to each other to remotely treat the secondary solution. Additionally, one can envision any of the disclosed embodiments combined with any of the disclosed radiators, or equivalents, to improve the efficacy of the delivery apparatus. Accordingly, the invention is defined by the following claims.

## Claims

1. Apparatus (70) delivering electromagnetic energy into a solution in response to an electromagnetic signal (18) to modifying one or more physical characteristics of said solution, said characteristics selected from the set of pH, conductivity, zeta potential, viscosity, surface tension or hydration force, said apparatus comprising:
a first tubular housing (72) having closed ends (104, 108) defining a first water-tight chamber within;
a helically shaped conductive member defining a coil apparatus (74) contained within said first chamber; said coil apparatus (74) delivering a magnetic field into the solution in response to said electromagnetic signal; and
at least one voltage probe (78) coupled to said coil apparatus (74) for delivering an electric field into the solution when said coil apparatus (74) responds to said electromagnetic signal.

2. The apparatus of claim 1 wherein said voltage probe is positioned within said first housing, electrically isolated from the solution.

3. The apparatus of claim 2 wherein said voltage probe comprises:
an inner non-conductive plate coupled to an inner surface of said first housing and defining a first end of said first chamber;
an outer non-conductive surface coupled to a first end of said first housing and defining a second water-tight chamber between said inner and outer plates and said first housing;
an electrically conductive plate contained within said second chamber for delivering an electric field into the solution when said coil apparatus receives said electromagnetic signal; and
a conductor for coupling said plate to said coil apparatus.

4. The apparatus of claim 3 wherein said second chamber is filled with a fluid.

5. The apparatus of claim 4 wherein said fluid is de-ionized water.

6. The apparatus of claim 3 wherein said coil apparatus has a first end, a second end and an inner tap; and wherein said electromagnetic signal is coupled to said first end and said inner tap and said voltage probe is coupled to said second end.

7. The apparatus of claim 3 wherein said coil apparatus is comprised of a conductive primary coil electrically coupled to said electromagnetic signal and a conductive secondary coil inductively coupled to said primary coil; and wherein said voltage probe is coupled to said secondary coil.

8. The apparatus of claim 1 wherein said coil apparatus is comprised of a conductive primary coil electrically coupled to said electromagnetic signal and a conductive secondary coil inductively coupled to said primary coil; and wherein said voltage probe is coupled to said secondary coil.

9. The apparatus of claim 3 wherein said coil apparatus is comprised of a conductive tapped coil having a first end, a second end and an inner tap; and wherein said electromagnetic signal is coupled to said first end and said inner tap and said voltage probe is coupled to said second end.

10. The apparatus of claim 2 wherein said voltage probe comprises:
a second water-tight housing coupled to an outer surface of said first housing; said second housing having an inner surface defining a second chamber;
an electrically conductive plate contained within said second chamber for delivering an electric field into the solution when said coil apparatus receives said electromagnetic signal; and
a conductor for coupling said plate to said coil apparatus.

11. The apparatus of claim 10 wherein said second chamber is filled with a fluid.

12. The apparatus of claim 11 wherein said fluid is de-ionized water.

13. The apparatus of claim 11 additionally comprising a third non-conductive water-tight housing coupled to said second housing; said third housing defining a third chamber coupled to said second chamber via a common passageway.

14. The apparatus of claim 13 wherein said second and third chambers are filled with a fluid.

15. The apparatus of claim 14 wherein said fluid is de-ionized water.

16. The apparatus of claim 13 wherein said third housing has an outer arcuate surface for external coupling to a pipe, tank or other curved surface.

17. The apparatus of claim 1 wherein said coil apparatus increases the amplitude of said electromagnetic signal coupled to said voltage probe.

18. A system (310) for modifying one or more physical characteristics of a solution (318), said characteristics selected from the set of pH, conductivity, zeta potential, viscosity, surface tension or hydration force, said system comprising:
a first container (312) suitable for containing a solution;
a primary solution (314) contained within said first container;
a second container (316) suitable for containing a target solution (318);
a target solution (318) contained within said second container;
an electrode (322) located proximate to said first container (312) ;
a signal generator (344) for producing an RF electromagnetic signal;
means for periodically applying said electromagnetic signal (18) to said electrode (322) to modify at least one of said physical characteristics of said primary solution; and
means for transporting one of said solutions along a path relative to the other of said solutions in close physical proximity to modify at least one of said physical characteristics of said target solution.

19. The system (310) of claim 18 wherein said means for transporting includes a radiator (330) located proximate to said target solution (318) within said second container (316); and wherein
said radiator (330) has an inlet (IN) for supplying said primary solution (314) from said first container (312) to said radiator (330) and an outlet (OUT) for drawing said primary solution (314) therefrom and returning said primary solution (314) to said first container (312).

20. The system (310) of claim 18 wherein said transporting means includes a tube (324) for recirculating said primary solution (314) to and from said second container; and wherein
said tube (324) has a first portion located proximate to said delivery apparatus (322) and a second portion (330) located proximate to said target solution (318) and wherein at least one of said physical characteristics of said target solution (318) is modified by its proximity to said primary solution (314).

21. A method for modifying physical characteristics of a solution (318), said characteristics selected from the set of pH, conductivity, zeta potential, viscosity, surface tension or hydration force, said method comprising:
providing a first container (312) suitable for containing a solution;
placing a primary solution (314) within said first container (312);
providing a second container (316) suitable for containing a solution;
placing said target solution (318) within said second container (316);
generating a radio frequency signal (18);
locating an electrode (322) proximate to said first container (312) ;
periodically energizing said electrode (322) with said radio frequency signal (18) to modify at least one of said physical characteristics of said primary solution; and
transporting at least one of said solutions (312, 318) relative to the other solution (312, 318) to modify at least one of said physical characteristics of said target solution (318).

22. The method of claim 21 wherein said transporting step comprises:
moving said primary solution (314) from to and from said second container;
locating a radiator (330) proximate to said target solution (318) within said second container; and
causing said primary solution (314) to pass through said radiator (330) to modify at least one of said physical characteristics of said target solution (318).

## Patentansprüche

1. Vorrichtung (70), die elektromagnetische Energie in eine Lösung als Antwort auf ein elektromagnetisches Signal (18) zuführt, um eine oder mehrere physikalische Eigenschaften der Lösung zu modifizieren, wobei die Eigenschaften ausgewählt sind aus dem Satz von pH-Wert, Leitfähigkeit, Zetapotential, Viskosität, Oberflächenspannung oder Hydratisierungskraft, wobei die Vorrichtung folgendes umfaßt:
ein erstes Rohrgehäuse (72) mit geschlossenen Enden (104, 108), das eine erste wasserdichte Kammer darin festlegt;
ein helikal geformtes Leitfähigkeitsbauteil, das eine Spulenvorrichtung (74) festlegt, die innerhalb der ersten Kammer enthalten ist; wobei die Spulenvorrichtung (74) ein magnetisches Feld in die Lösung als Antwort auf ein elektromagnetisches Signal zuführt; und
wenigstens ein Spannungsfühler (78), der mit der Spulenvorrichtung (74) zur Zuführung eines elektrischen Feldes in die Lösung, wenn die Spulenvorrichtung (74) auf das elektromagnetische Signal anspricht, gekoppelt ist.

2. Vorrichtung nach Anspruch 1, wobei der Spannungsfühler innerhalb des ersten Gehäuses angeordnet ist, das von der Lösung elektrisch isoliert ist.

3. Vorrichtung nach Anspruch 2, wobei der Spannungsfühler folgendes umfaßt:
eine nichtleitfähige Innenplatte, die mit einer Innenflächen des ersten Gehäuses gekoppelt ist und ein erstes Ende der ersten Kammer festlegt;
eine nichtleitfähige Außenfläche, die mit einem ersten Ende des ersten Gehäuses gekoppelt ist und eine zweite wasserdichte Kammer zwischen den Innen- und Außenplatten und dem ersten Gehäuse festlegt;
eine eletrisch leitfähige Platte, die innerhalb der zweiten Kammer zur Zuführung eines elektrischen Feldes in die Lösung, wenn die Spulenvorrichtung das elektromagnetische Signal empfängt, enthalten ist; und
einen Leiter zum Koppeln der Platte mit der Spulenvorrichtung.

4. Vorrichtung nach Anspruch 3, wobei die zweite Kammer mit einer Flüssigkeit gefüllt ist.

5. Vorrichtung nach Anspruch 4, wobei die Flüssigkeit desionisiertes Wasser ist.

6. Vorrichtung nach Anspruch 3, wobei die Spulenvorrichtung ein erstes Ende, ein zweites Ende und einen Innenabgriff aufweist; und wobei das elektromagnetische Signal mit dem ersten Ende und dem Innenabgriff gekoppelt ist und der Spannungsfühler mit dem zweiten Ende gekoppelt ist.

7. Vorrichtung nach Anspruch 3, wobei die Spulenvorrichtung aus einer leitfähigen Primärspule, die mit dem elektromagnetischen Signal elektrisch gekoppelt ist, und einer leitfähigen Sekundärspule, die mit der Primärspule induktiv gekoppelt ist, besteht; und wobei der Spannungsfühler mit der Sekundärspule gekoppelt ist.

8. Vorrichtung nach Anspruch 1, wobei die Spulenvorrichtung aus einer leitfähigen Primärspule, die mit dem elektromagnetischen Signal elektrisch gekoppelt ist, und einer leitfähigen Sekundärspule, die mit der Primärspule induktiv gekoppelt ist, besteht; und wobei der Spannungsfühler mit der Sekundärspule gekoppelt ist.

9. Vorrichtung nach Anspruch 3, wobei die Spulenvorrichtung aus einer Abzweigspule mit einem ersten Ende, einem zweiten Ende und einem Innenabgriff besteht; und wobei das elektromagnetische Signal mit dem ersten Ende und dem Innenabgriff gekoppelt ist und der Spannungsfühler mit dem zweiten Ende gekoppelt ist.

10. Vorrichtung nach Anspruch 2, wobei der Spannungsfühler folgendes umfaßt:
ein zweites wasserdichtes Gehäuse, das mit einer Außenfläche des ersten Gehäuses gekoppelt ist; wobei das zweite Gehäuse eine Innenfläche aufweist, die eine zweite Kammer festlegt;
eine elektrisch leitfähige Platte, die innerhalb der zweiten Kammer zur Zuführung eines elektrischen Feldes in die Lösung, wenn die Spulenvorrichtung das elektromagnetische Signal empfängt, enthalten ist; und
einen Leiter zum Koppeln der Platte mit der Spulenvorrichtung.

11. Vorrichtung nach Anspruch 10, wobei die zweite Kammer mit einer Flüssigkeit gefüllt ist.

12. Vorrichtung nach Anspruch 11, wobei die Flüssigkeit desionisiertes Wasser ist.

13. Vorrichtung nach Anspruch 11, die zusätzlich ein drittes nichtleitfähiges wasserdichtes Gehäuse umfaßt, das mit dem zweiten Gehäuse gekoppelt ist, wobei das dritte Gehäuse eine dritte Kammer festlegt, die mit der zweiten Kammer über einen gewöhnlichen Durchgang gekoppelt ist.

14. Vorrichtung nach Anspruch 13, wobei die zweite und dritte Kammer mit einer Flüssigkeit gefüllt ist.

15. Vorrichtung nach Anspruch 14, wobei die Flüssigkeit desionisiertes Wasser ist.

16. Vorrichtung nach Anspruch 13, wobei das dritte Gehäuse eine gekrümmte Außenfläche zum externen Koppeln mit einem Rohr, Tank oder einer anderen gekrümmten Oberfläche aufweist.

17. Vorrichtung nach Anspruch 1, wobei die Spulenvorrichtung die Amplitude des elektromagnetischen Signals, das mit dem Spannungsfühler gekoppelt ist, erhöht.

18. System (310) zur Modifizierung einer oder mehrerer physikalischer Eigenschaften einer Lösung (318), wobei die Eigenschaften ausgewählt sind aus dem Satz von pH-Wert, Leitfähigkeit, Zetapotential, Viskosität, Oberflächenspannung oder Hydratisierungskraft, wobei das System folgendes umfaßt:
einen ersten Behälter (312), der in der Lage ist, eine Lösung zu enthalten;
eine primäre Lösung (314), die innerhalb des ersten Behälters enthalten ist;
einen zweiten Behälter (316), der in der Lage ist, eine Ziellösung (318) zu enthalten;
eine Ziellösung (318), die innerhalb des zweiten Behälters enthalten ist;
eine Elektrode (322), die sich benachbart zum ersten Behälter (312) befindet;
ein Signalgenerator (344) zur Erzeugung eines elektromagnetischen Radiofrequenzsignals (elektromagnetischen RF-Signals);
eine Vorrichtung zum regelmäßigen Anlegen des elektromagnetischen Signals (18) an die Elektrode (322), um wenigstens eine der physikalischen Eigenschaften der primären Lösung zu modifizieren; und
eine Vorrichtung zum Transportieren einer der Lösungen entlang eines Weges relativ zu der anderen der Lösungen in enger physikalischer Nähe, um wenigstens eine der physikalischen Eigenschaften der Ziellösung zu modifizieren.

19. System (310) nach Anspruch 18, wobei die Vorrichtung zum Transportieren einen Strahler (330) einschließt, der sich benachbart zur Ziellösung (318) innerhalb des zweiten Behälters (316) befindet; und wobei
der Strahler (330) einen Einlaß (IN) zum Zuführen der primären Lösung (314) vom ersten Behälter (312) zum Strahler (330) und einen Auslaß (OUT) zum Ziehen der primären Lösung (314) daraus und Zurückführen der primären Lösung (314) zum ersten Behälter (312) aufweist.

20. System (310) nach Anspruch 18, wobei die Transportvorrichtung ein Rohr (324) zum Imkreislaufumpumpen der primären Lösung (314) zu und aus dem zweiten Behälter einschließt; und wobei
das Rohr (324) einen ersten Teil, der sich benachbart zur Zuführvorrichtung (322) befindet, und einen zweiten Teil (330) aufweist, der sich benachbart zur Ziellösung (318) befindet, und wobei wenigstens eine der physikalischen Eigenschaften der Ziellösung (318). durch seine Nähe zur primären Lösung (314) modifiziert wird.

21. Verfahren zur Modifizierung der physikalischen Eigenschaften einer Lösung (318), wobei die Eigenschaften ausgewählt sind aus dem Satz von pH-Wert, Leitfähigkeit, Zetapotential, Viskosität, Oberflächenspannung oder Hydratisierungskraft, wobei das Verfahren folgendes umfaßt:
Bereitstellen eines ersten Behälters (312), der in der Lage ist, eine Lösung zu enthalten;
Unterbringen einer primären Lösung (314) innerhalb des ersten Behälters (312);
Bereitstellen eines zweiten Behälter (316), der in der Lage ist, eine Lösung zu enthalten;
Unterbringen der Ziellösung (318) innerhalb des zweiten Behälters (316);
Erzeugen eines Radiofrequenzsignals (18);
Anbringen einer Elektrode (322) benachbart zum ersten Behälter (312);
regelmäßiges Erregen der Elektrode (322) mit dem Radiofrequenzsignal (18), um wenigstens eine der physikalischen Eigenschaften der primären Lösung zu modifizieren; und
Transportieren wenigstens einer der Lösungen (312, 318) relativ zu der anderen Lösung (312, 318), um wenigstens eine der physikalischen Eigenschaften der Ziellösung (318) zu modifizieren.

22. Verfahren nach Anspruch 21, wobei der Transportschritt folgendes . umfaßt:
Bewegen der primären Lösung (314) zu und aus dem zweiten Behälter;
Anbringen eines Strahlers (330) benachbart zur Ziellösung (318) innerhalb des zweiten Behälters; und
Strömenlassen der primären Lösung (314) durch den Strahler (330), um wenigstens eine der physikalischen Eigenschaften der Ziellösung (318) zu modifizieren.

## Revendications

1. Appareil (70) délivrant de l'énergie électromagnétique dans une solution en réponse à un signal électromagnétique (18) afin de modifier une ou plusieurs caractéristiques physiques de ladite solution, lesdites caractéristiques étant sélectionnées parmi le groupe de caractéristiques comprenant le pH, la conductivité, le potentiel zêta, la viscosité et la tension superficielle ou la force d'hydratation, ledit appareil comprenant :
un premier logement tubulaire (72) ayant des extrémités fermées (104, 108) définissant une première chambre imperméable à l'eau à l'intérieur de celui-ci ;
un élément conducteur de forme hélicoïdale définissant un appareil à bobine (74) contenu à l'intérieur de ladite première chambre ; ledit appareil à bobine (74) délivrant un champ magnétique dans la solution en réponse audit signal électromagnétique ; et
au moins un indicateur de tension (78) couplé audit appareil à bobine (74) destiné à délivrer un champ électrique dans la solution lorsque ledit appareil à bobine (74) répond audit signal électromagnétique.

2. Appareil selon la revendication 1, dans lequel ledit indicateur de tension est positionné à l'intérieur dudit premier logement, isolé électriquement de la solution.

3. Appareil selon la revendication 2, dans lequel ledit indicateur de tension comprend :
une plaque non-conductrice intérieure couplée à une surface intérieure dudit premier logement et définissant une première extrémité de ladite première chambre ;
une surface non-conductrice extérieure couplée à une première extrémité dudit premier logement et définissant une deuxième chambre imperméable à l'eau entre lesdites plaques intérieure et extérieure et ledit premier logement ;
une plaque électriquement conductrice contenue à l'intérieur de ladite deuxième chambre destinée à délivrer un champ électrique dans la solution lorsque ledit. appareil à bobine reçoit ledit signal électromagnétique ; et
un conducteur destiné à coupler ladite plaque audit appareil à bobine.

4. Appareil selon revendication 3, dans lequel ladite deuxième chambre est remplie avec un fluide.

5. Appareil selon la revendication 4, dans lequel ledit fluide est de l'eau déminéralisée.

6. Appareil selon la revendication 3, dans lequel ledit appareil à bobine possède une première extrémité, une deuxième extrémité et une prise intérieure ; et dans lequel ledit signal électromagnétique est couplé à ladite première extrémité et à ladite prise intérieure et dans lequel ledit indicateur de tension est couplé à ladite deuxième extrémité.

7. Appareil selon la revendication 3, dans lequel ledit appareil à bobine se compose d'une bobine primaire conductrice couplée électriquement audit signal électromagnétique et d'une bobine secondaire conductrice couplée de manière inductive à ladite bobine primaire ; et dans lequel ledit indicateur de tension est couplé à ladite bobine secondaire.

8. Appareil selon la revendication 1, dans lequel ledit appareil à bobine se compose d'une bobine primaire conductrice couplée électriquement audit signal électromagnétique et d'une bobine secondaire conductrice couplée de manière inductive à ladite bobine primaire ; et dans lequel ledit indicateur de tension est couplé à ladite bobine secondaire.

9. Appareil selon la revendication 3, dans lequel ledit appareil à bobine se compose d'une bobine à prise conductrice ayant une première extrémité, une deuxième extrémité et une prise intérieure ; et dans lequel ledit signal électromagnétique est couplé à ladite première extrémité et à ladite prise intérieure et dans lequel ledit indicateur de tension est couplé à ladite deuxième extrémité.

10. Appareil selon la revendication 2, dans lequel ledit indicateur de tension comprend :
un deuxième logement imperméable à l'eau couplé à une surface extérieure dudit premier logement ; ledit deuxième logement ayant une surface intérieure définissant une deuxième chambre ;
une plaque électriquement conductrice contenue à l'intérieur de ladite deuxième chambre destiné à délivrer un champ électrique dans la solution lorsque ledit appareil à bobine reçoit ledit signal électromagnétique ; et
un conducteur destiné à coupler ladite plaque audit appareil à bobine.

11. Appareil selon la revendication 10, dans lequel ladite deuxième chambre est remplie avec un fluide.

12. Appareil selon la revendication 11, dans lequel ledit fluide est de l'eau déminéralisée.

13. Appareil selon la revendication 11, comprenant en outre un troisième logement imperméable à l'eau nonconducteur couplé audit deuxième logement ; ledit troisième logement définissant une troisième chambre couplée à ladite deuxième chambre via un passage commun.

14. Appareil selon la revendication 13, dans lequel lesdites deuxième et troisième chambres sont remplies avec un fluide.

15. Appareil selon la revendication 14, dans lequel ledit fluide est de l'eau déminéralisée.

16. Appareil selon la revendication 13, dans lequel ledit troisième logement possède une surface incurvée extérieure pour le couplage externe à un tuyau, une cuve ou une autre surface courbe.

17. Appareil selon la revendication 1, dans lequel ledit appareil à bobine augmente l'amplitude dudit signal électromagnétique couplé audit indicateur de tension.

18. Système (310) destiné à modifier une ou plusieurs caractéristiques physiques d'une solution (318), lesdites caractéristiques étant sélectionnées parmi le groupe de caractéristiques comprenant le pH, la conductivité, le potentiel zêta, la viscosité, la tension superficielle ou la force d'hydratation, ledit système comprenant :
un premier conteneur (312) adapté pour contenir une solution ;
une solution principale (314) contenue à l'intérieur dudit premier conteneur ;
un deuxième conteneur (316) adapté pour contenir une solution cible (318) ;
une solution cible (318) contenue à l'intérieur dudit deuxième conteneur ;
une électrode (322) située à proximité dudit premier conteneur (312) ;
un générateur de signaux (344) destiné à produire un signal électromagnétique HF ;
des moyens pour appliquer de manière périodique ledit signal électromagnétique (18) à ladite électrode (322) afin de modifier au moins une desdites caractéristiques physiques de ladite solution principale ; et
des moyens pour transporter une desdites solutions le long d'un chemin par rapport à l'autre desdites solutions de manière physiquement rapprochée afin de modifier au moins une desdites caractéristiques physiques de ladite solution cible.

19. Système (310) selon la revendication 18, dans lequel lesdits moyens de transport comprennent un radiateur (330) situé à proximité de ladite solution cible (318) à l'intérieur dudit deuxième conteneur (316) ; et dans lequel
ledit radiateur (330) possède une entrée (IN) pour fournir ladite solution principale (314) dudit premier conteneur (312) audit radiateur (330) et une sortie (OUT) pour en retirer ladite solution principale (314) et renvoyer ladite solution principale (314) vers ledit premier conteneur (312).

20. Système (310) selon la revendication 18, dans lequel lesdits moyens de transport comprennent un tube (324) pour faire recirculer ladite solution principale (314) vers et en provenance dudit deuxième conteneur ; et dans lequel :
ledit tube (324) possède une première partie située à proximité dudit appareil d'alimentation (322) et une deuxième partie (330) située à proximité de ladite solution cible (318) et dans lequel au moins une desdites caractéristiques physiques de ladite solution cible (318) est modifiée du fait de sa proximité avec ladite solution principale (314).

21. Procédé pour modifier les caractéristiques physiques d'une solution (318), lesdites caractéristiques étant sélectionnées parmi le groupe de caractéristiques comprenant le pH, la conductivité, le potentiel zêta, la tension superficielle ou la force d'hydratation, ledit procédé comprenant les étapes consistant à :
fournir un premier conteneur (312) adapté pour contenir une solution ;
placer une solution principale (314) à l'intérieur dudit premier conteneur (312) ;
fournir un deuxième conteneur (316) adapté pour contenir une solution ;
placer ladite solution cible (318) à l'intérieur dudit deuxième conteneur (316) ;
générer un signal haute fréquence (18) ;
placer une électrode (322) à proximité dudit premier conteneur (312) ;
alimenter de manière périodique ladite électrode (322) avec ledit signal haute fréquence (18) afin de modifier au moins une desdites caractéristiques physiques de ladite solution principale ; et
transporter au moins une desdites solutions (312, 318) par rapport à l'autre solution (312, 318) afin de modifier au moins une desdites caractéristiques physiques de ladite solution cible (318).

22. Procédé selon la revendication 22, dans lequel ladite étape de transport comprend les étapes consistant à :
déplacer ladite solution principale (314) vers et en provenance dudit deuxième conteneur ;
placer un radiateur (330) à proximité de ladite solution cible (318) à l'intérieur dudit deuxième conteneur ; et
provoquer le passage de ladite solution principale (314) à travers ledit radiateur (330) afin de modifier une au moins desdites caractéristiques physiques de ladite solution cible (318).
